(19) **Europäisches Patentamt / European Patent Office / Office européen des brevets**

(11) **EP 4 020 635 A1**

(12) **EUROPEAN PATENT APPLICATION**
published in accordance with Art. 153(4) EPC

(43) Date of publication:
**29.06.2022 Bulletin 2022/26**

(21) Application number: **20854875.0**

(22) Date of filing: **19.08.2020**

(51) International Patent Classification (IPC):
*H01M 4/58* (2010.01)  *H01M 4/66* (2006.01)
*H01M 10/052* (2010.01)  *H01M 10/0566* (2010.01)
*H01M 10/0585* (2010.01)  *H01M 10/44* (2006.01)
*H01M 50/10* (2021.01)  *H01M 50/20* (2021.01)
*H01M 50/50* (2021.01)  *H01M 50/543* (2021.01)

(52) Cooperative Patent Classification (CPC):
H01M 4/58; H01M 4/66; H01M 10/052;
H01M 10/0566; H01M 10/0585; H01M 10/44;
H01M 50/10; H01M 50/20; H01M 50/50;
H01M 50/543; Y02E 60/10; Y02P 70/50

(86) International application number:
**PCT/JP2020/031216**

(87) International publication number:
**WO 2021/033706 (25.02.2021 Gazette 2021/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.08.2019  JP 2019149935
11.09.2019  JP 2019165451
14.11.2019  JP 2019206337**

(71) Applicant: **APB Corporation
Tokyo 101-0041 (JP)**

(72) Inventors:
• **NASU, Kotaro
Kyoto-shi, Kyoto 605-0995 (JP)**
• **MIZUNO, Yusuke
Kyoto-shi, Kyoto 605-0995 (JP)**

• **TANAKA, Yuya
Kyoto-shi, Kyoto 605-0995 (JP)**
• **NAKASHIMA, Yusuke
Kyoto-shi, Kyoto 605-0995 (JP)**
• **OKURA, Masatoshi
Kyoto-shi, Kyoto 605-0995 (JP)**
• **KAWAKITA, Kenichi
Kyoto-shi, Kyoto 605-0995 (JP)**
• **TSUCHIDA, Kazuya
Kyoto-shi, Kyoto 605-0995 (JP)**
• **NISHIGUCHI, Makoto
Kyoto-shi, Kyoto 605-0995 (JP)**
• **HORIE, Hideaki
Tokyo 101-0041 (JP)**

(74) Representative: **Hoefer & Partner Patentanwälte
mbB
Pilgersheimer Straße 20
81543 München (DE)**

(54) **LITHIUM ION BATTERY MODULE AND BATTERY PACK**

(57)  A lithium ion battery module includes a first metal sheet, a power storage element, and a second metal sheet in this order, in which the power storage element includes a lithium ion cell in which a positive electrode current collector, a positive electrode active material layer, a separator, a negative electrode active material layer, and a negative electrode current collector are laminated in this order, the positive electrode current collector and the negative electrode current collector are provided as outermost layers, and an electrolytic solution is enclosed by sealing outer peripheries of the positive electrode active material layer and the negative electrode active material layer, a conductive elastic member is arranged between the positive electrode current collector of the outermost layer of the power storage element and the first metal sheet, and/or between the negative electrode current collector of the outermost layer of the power storage element and the second metal sheet, and the first metal sheet and the second metal sheet are insulated from each other.

EP 4 020 635 A1

[FIG. 2]

A

B

**Description**

Technical Field

The present invention relates to a lithium ion battery module and a battery pack.

Background Art

A lithium ion battery having a high energy density is known as a battery that can be used as a power supply for electric vehicles and hybrid electric vehicles. A lithium ion battery is used as a power supply by being formed into a battery module whose voltage is adjusted to a required voltage by housing power storage elements in which cells are connected in series in a battery outer container or a battery pack whose voltage and capacity are adjusted by combining a plurality of battery modules.

Among these, a laminate type battery formed by sealing a plurality of laminated bipolar batteries that can be connected by extracting a current to the outside without drawing out an electrode terminal from a package with a laminated sheet is known (refer to PTL 1).

Citation List

Patent Literature

[PTL 1] Japanese Laid-open Patent Publication No. 2005-276486

Summary of Invention

Technical Problem

In the laminate type battery (also referred to as a battery module) described in PTL 1, a current is extracted to the outside by a contact portion between a current collector which is on the outermost layer of a power storage element and a conductive layer of the laminated sheet. However, in the case where contact failure occurs between the current collector on the outermost layer and a metal layer of a battery outer container due to the effect of the distortion of the power storage element and uneven thickness of the electrodes that occur in the manufacturing process, or in the case where the surface of the metal layer is not sufficiently smooth and the battery modules are laminated and connected, contact failure may occur between the battery modules.

The present invention has been made in view of the above problems, and an object of the present invention is to provide a lithium ion battery module in which a current collector on an outermost layer of a power storage element can be connected to a portion that extracts a current to the outside without causing contact failure even when the power storage element is distorted or the thickness of the electrodes is uneven.

Solution to Problem

The present invention relates to a lithium ion battery module including, in order, a first metal sheet, a power storage element, and a second metal sheet, in which the power storage element includes a lithium ion cell in which a positive electrode current collector, a positive electrode active material layer, a separator, a negative electrode active material layer, and a negative electrode current collector are laminated in this order, the positive electrode current collector and the negative electrode current collector are provided as outermost layers, and an electrolytic solution is enclosed by sealing outer peripheries of the positive electrode active material layer and the negative electrode active material layer, a conductive elastic member is arranged between the positive electrode current collector of the outermost layer of the power storage element and the first metal sheet, and/or between the negative electrode current collector of the outermost layer of the power storage element and the second metal sheet, and the first metal sheet and the second metal sheet are insulated from each other, a battery pack including a plurality of the lithium ion battery modules, in which positive electrodes and negative electrodes of the lithium ion battery modules are connected in series, and a battery pack including a plurality of the lithium ion battery modules, in which positive electrodes and negative electrodes of the lithium ion battery modules are connected in parallel. Advantageous Effects of Invention

In the lithium ion battery module of the present invention, the current collector on the outermost layer of the power storage element can be connected to the portion that extracts a current to the outside without causing contact failure even when the power storage element is distorted or the thickness of the electrodes is uneven.

Brief Description of Drawings

FIG. 1 is a cross-sectional view schematically showing an example of a lithium ion cell.

FIG. 2A is a cross-sectional view schematically showing an example of a first aspect of a lithium ion battery module, and FIG. 2B is a perspective cross-sectional view schematically showing the example of the first aspect of the lithium ion battery module.

FIG. 3A is a cross-sectional view schematically showing an example of a second aspect of a lithium ion battery module, and FIG. 3B is a perspective cross-sectional view schematically showing the example of the second aspect of the lithium ion battery module.

FIG. 4 is a cross-sectional view schematically showing an example of a first aspect of a battery pack.

FIG. 5 is a cross-sectional view schematically showing an example of a second aspect of the battery pack.

FIG. 6A is a cross-sectional view schematically showing an example of a preferable aspect of a lithium ion battery module according to another embodiment, and FIG. 6B is a perspective view schematically showing the example of the preferable aspect of the lithium ion battery module according to the other embodiment.

FIG. 7 is a cross-sectional view schematically showing an example of a first aspect of a battery pack according to another embodiment.

FIG. 8 is a cross-sectional view schematically showing an example of a second aspect of the battery pack according to the other embodiment.

FIG. 9 is a cross-sectional view schematically showing another example of the second aspect of the battery pack according to the other embodiment.

FIG. 10 is a cross-sectional view schematically showing an example of a lithium ion battery module according to still another embodiment.

FIG. 11 is a block diagram showing an example of the overall configuration of the lithium ion battery module.

FIG. 12 is an example of a SOC-CCV curve of a cell using a positive electrode active material having an olivine type crystal structure.

FIG. 13 is a flowchart showing a procedure of a method of charging a lithium ion battery module.

FIG. 14 is a diagram showing the SOC-CCV curve of each cell of an assembled battery in which the number of laminated cells is 3 (N = 3) and the SOC-CCV curve of the assembled battery.

Description of Embodiments

Hereinafter, a lithium ion battery module and a battery pack of the present invention will be described.

The module means a combination unit in which a plurality of cells are combined so as to function as one power supply by connecting the cells in series.

In the present specification, when referring to the lithium ion battery, the concept includes a lithium ion secondary battery.

[Lithium Ion Cell]

A lithium ion cell is configured such that a positive electrode current collector, a positive electrode active material layer, a separator, a negative electrode active material layer, and a negative electrode current collector are laminated in this order, the positive electrode current collector and the negative electrode current collector are provided as outermost layers, and an electrolytic solution is enclosed by sealing outer peripheries of the positive electrode active material layer and the negative electrode active material layer.

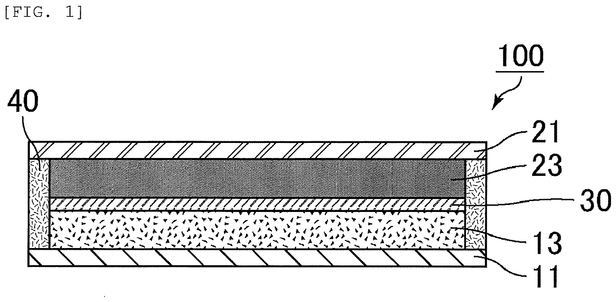

FIG. 1 is a cross-sectional view schematically showing an example of a lithium ion cell.

In a lithium ion cell 100 shown in FIG. 1, a positive electrode current collector 11, a positive electrode active material layer 13, a separator 30, a negative electrode active material layer 23, and a negative electrode current collector 21 are laminated in this order, and the positive electrode current collector 11 and the negative electrode current collector 21 are provided as the outermost layers. The outer peripheries of the positive electrode active material layer 13 and the negative electrode active material layer 23 are sealed with a sealing material 40 and an electrolytic solution is enclosed.

Hereinafter, each configuration of the lithium ion cell will be described.

(Positive Electrode Current Collector)

As the positive electrode current collector 11, a current collector used in a known lithium ion cell can be used, and for example, a known resin current collector formed of a metal current collector and a conductive resin composition including a conductive material and a resin (a resin current collector disclosed in Japanese Laid-open Patent Publication No. 2012-150905, Pamphlet of International Publication No. WO 2015-005116, or the like) can be used.

The positive electrode current collector 11 is preferably a resin current collector from the viewpoint of battery characteristics and the like.

As the metal current collector, for example, one or more metal materials selected from the group consisting of copper, aluminum, titanium, nickel, tantalum, niobium, hafnium, zirconium, zinc, tungsten, bismuth, antimony, and alloys including one or more of these metals, and alloys of stainless steel can be used. These metal materials may be used in the form of a thin plate, a metal foil, or the like. In addition, a metal current collector may be used in which a film formed of the metal material is formed on the surface of a base material formed of a material other than the metal material by a method such as sputtering, plating, electrodeposition, or coating.

The resin current collector preferably contains a conductive filler and a matrix resin.

Examples of the matrix resin include polyethylene (PE), polypropylene (PP), polymethylpentene (PMP), polycycloolefin (PCO), polyethylene terephthalate (PET), polyether nitrile (PEN), polytetrafluoroethylene (PTFE), styrene-butadiene rubber (SBR), polyacrylonitrile (PAN), polymethyl acrylate (PMA), polymethyl methacrylate (PMMA), polyvinylidene fluoride (PVdF), epoxy resin, silicone resin, and mixtures thereof.

From the viewpoint of electrical stability, polyethylene (PE), polypropylene (PP), polymethylpentene (PMP), and polycycloolefin (PCO) are preferable, and polyethylene (PE), polypropylene (PP), and polymethylpentene (PMP) are more preferable.

The conductive filler is selected from materials having conductivity.

Specific examples of the materials include metals [such as nickel, aluminum, stainless steel (SUS), silver, copper, and titanium], carbon [such as graphite and carbon black (such as acetylene black, ketjen black, furnace black, channel black, and thermal lamp black)], and mixtures thereof, but the material is not limited thereto.

These conductive fillers may be used alone or in combination of two or more thereof. In addition, alloys or metal oxides of these may also be used. From the viewpoint of electrical stability, aluminum, stainless steel, carbon, silver, copper, titanium, and mixtures thereof are preferable, silver, aluminum, stainless steel, and carbon are more preferable, and carbon is even more preferable. Further, these conductive fillers may also be one obtained by applying a conductive material (a metal material among the above-described conductive filler materials) around a particle-based ceramic material or a resin material by plating or the like.

The average particle diameter of the conductive filler is not particularly limited, but from the viewpoint of electric properties of the battery, the average particle diameter is preferably 0.01 to 10 $\mu$m, more preferably 0.02 to 5 $\mu$m, and even more preferably 0.03 to 1 $\mu$m. Incidentally, in the present specification, the term "particle diameter" means the largest distance L between any two points on a contour line of the particle. For the value of the "average particle diameter," a value is employed which is calculated using observation means, such as a scanning electron microscope (SEM) or a transmission electron microscope (TEM), as an average value of particle diameters of the particles observed in several to several tens of view fields.

The shape (form) of the conductive filler is not limited to the particle form, but may be a form other than the particle form, and may be a form that has been put to practical use as what is called a filler-based conductive resin composition, such as carbon nanotubes.

The conductive filler may be a conductive fiber having a fibrous shape.

Examples of the conductive fiber include carbon fibers such as PAN-based carbon fibers, and pitch-based carbon fibers, a conductive fiber formed by uniformly dispersing a highly conductive metal or graphite in a synthetic fiber, a metal fiber formed by fiberizing a metal such as stainless steel, a conductive fiber formed by coating a surface of an organic fiber with a metal, and a conductive fiber formed by coating a surface of an organic fiber with a resin containing a conductive substance. Among these conductive fibers, carbon fibers are preferable. In addition, a fibrous polypropylene resin kneaded with graphene is also preferable.

In the case where the conductive filler is a conductive fiber, the average fiber diameter thereof is preferably 0.1 to 20 $\mu$m.

The weight ratio of the conductive filler in the resin current collector is preferably 5% to 90% by weight, and more preferably 20% to 80% by weight.

In particular, in the case where the conductive filler is carbon, the weight ratio of the conductive filler is preferably 20% to 30% by weight.

In addition to the matrix resin and the conductive filler, the resin current collector may contain other components (a dispersant, a cross-linking accelerating agent, a cross-linking agent, a coloring agent, an ultraviolet absorbent, a plasticizer, and the like). In addition, a plurality of layers formed of a conductive resin composition may be used in a laminated manner, and a resin current collector and a metal foil may be used in a laminated manner.

The thickness of the positive electrode current collector 11 is not particularly limited, and is preferably 5 to 150 $\mu$m. In the case where a plurality of layers are laminated and used as a positive electrode current collector, the total thickness after the lamination is preferably 5 to 150 $\mu$m.

The positive electrode current collector 11 can be obtained, for example, by molding a conductive resin composition, which is obtained by melt-kneading the matrix resin, the conductive filler, and a dispersant for a filler to be used as necessary, into a film form by a known method.

As a method of molding the conductive resin composition into a film form, for example, known film molding methods such as a T-die method, an inflation method, and a calendering method can be adopted. Incidentally, the positive electrode current collector 11 can also be obtained by a molding method other than the film molding.

(Positive Electrode Active Material Layer)

The positive electrode active material layer 13 is preferably a non-bound body of a mixture containing a positive electrode active material.

Here, the non-bound body means that the position of the positive electrode active material is not fixed in the positive electrode active material layer, and the positive electrode active materials are not irreversibly fixed to each other and the positive electrode active material is not irreversibly fixed to the current collector.

The case where the positive electrode active material layer 13 is a non-bound body is preferable since the positive electrode active materials are not irreversibly fixed to each other, thus making it possible to separate the positive electrode active materials without mechanically destroying the interface between the positive electrode active materials, and even in the case where stress is applied to the positive electrode active material layer 13, movement of the positive electrode active material makes it possible to prevent the destruction of the positive electrode active material layer 13.

The positive electrode active material layer 13, which is a non-bound body, can be obtained by a method of making a mixture that contains a positive electrode active material and an electrolytic solution and does not contain a binding agent into the positive electrode active material layer 13, and the like.

Incidentally, in the present specification, the binding agent means a chemical agent incapable of reversibly fixing the positive electrode active materials to each other and reversibly fixing the positive electrode active material to the current collector, and examples of the binding agent include known solvent drying type binding agents for lithium ion batteries such as starch, polyvinylidene fluoride, polyvinyl alcohol, carboxymethyl cellulose, polyvinylpyrrolidone, tetrafluoroethylene, styrene-butadiene rubber, polyethylene, and polypropylene. These binding agents are used by being dissolved or dispersed in a solvent, and when the solvent is volatilized and distilled off, the binding agents become solid to irreversibly fix the positive electrode active materials to each other and the positive electrode active material to the current collector.

Examples of the positive electrode active material include composite oxides of lithium and transition metals {composite oxides with one transition metal (such as $LiCoO_2$, $LiNiO_2$, $LiAlMnO_4$, $LiMnO_2$, and $LiMn_2O_4$), composite oxides with two transition metal elements (for example, $LiFeMnO_4$, $LiNi_{1-x}CO_xO_2$, $LiM_{1-y}Co_yO_2$, $LiNi_{1/3}Co_{1/3}Al_{1/3}O_2$, and $LiNi_{0.8}Co_{0.15}Al_{0.05}O_2$), and composite oxides with three or more metal elements [for example, $LiM_aM'_bM''_cO_2$ (where M, M', and M'' are different transition metal elements and $a + b + c = 1$ is satisfied, for example, $LiNi_{1/3}Mn_{1/3}Co_{1/3}O_2$)]}, lithium-containing transition metal phosphates (for example, $LiFePO_4$, $LiCoPO_4$, $LiMnPO_4$, and $LiNiPO_4$), transition metal oxides (for example, $MnO_2$ and $V_2O_5$), transition metal sulfides (for example, $MoS_2$ and $TiS_2$), conductive polymers (for example, polyaniline, polypyrrole, polythiophene, polyacetylene, and poly-p-phenylene and polyvinylcarbazole), and the like, and two or more of these materials may be used in combination. Incidentally, the lithium-containing transition metal phosphate may be one in which a part of the transition metal site is replaced with another transition metal.

The volume average particle diameter of the positive electrode active material is preferably 0.01 $\mu$m to 100 $\mu$m, more preferably 0.1 $\mu$m to 35 $\mu$m, and even more preferably 2 $\mu$m to 30 $\mu$m from the viewpoint of electric properties of the battery.

The positive electrode active material may be a coated positive electrode active material having at least a part of its surface coated with a coating material containing a polymer compound.

When the periphery of the positive electrode active material is coated with the coating material, the change in volume of the positive electrode is mitigated, thereby making it possible to suppress the expansion of the positive electrode.

As the polymer compound constituting the coating material, those described as resins for coating active materials in Japanese Laid-open Patent Publication No. 2017-054703, Pamphlet of International Publication No. WO 2015-005117, or the like can be suitably used.

The coating material may contain a conductive agent.

As the conductive agent, the same one as the conductive filler contained in the positive electrode current collector 11 can be suitably used.

The positive electrode active material layer 13 may contain an adhesive resin.

As the adhesive resin, for example, there can be suitably used one prepared by mixing a small amount of an organic solvent with the resin for coating non-aqueous secondary battery active materials, described in Japanese Laid-open Patent Publication No. 2017-054703 and adjusting the glass transition temperature of the mixture to room temperature or lower, one described as an adhesive in Japanese Laid-open Patent Publication No. H10-255805, and the like.

Incidentally, the adhesive resin means a resin that has adhesiveness (properties that allow adhesion by applying slight pressure without the use of water, solvent, heat, or the like). On the other hand, the above-mentioned solvent drying type binding agent for lithium ion batteries means a binding agent that becomes solid without having adhesiveness when a solvent is volatilized and distilled off.

Therefore, the above-mentioned binding agent and the adhesive resin are different materials.

The positive electrode active material layer 13 may contain an electrolytic solution containing an electrolyte and a non-aqueous solvent.

As the electrolyte, ones used for known electrolytic solutions, and the like can be used, and examples of the electrolyte include inorganic acid lithium salts such as $LiPF_6$, $LiBF_4$, $LiSbF_6$, $LiAsF_6$, $LiN(FSO_2)_2$, and $LiClO_4$, and organic acid lithium salts such as $LiN(CF_3SO_2)_2$, $LiN(C_2F_5SO_2)_2$, and $LiC(CF_3SO_2)_3$, and $LiN(FSO_2)_2$ (also referred to as LiFSI) is preferable.

As the non-aqueous solvent, ones used for known electrolytic solutions, and the like can be used, and for example, a lactone compound, a cyclic or chain carbonic acid ester, a chain carboxylic acid ester, a cyclic or chain ether, a phosphoric acid ester, a nitrile compound, an amide compound, a sulfone, a sulfolane, and the like and mixtures thereof can be used.

Examples of the lactone compound include fivemembered ring lactone compounds (such as γ-butyrolactone and γ-valerolactone), and six-membered ring lactone compounds (such as 5-valerolactone).

Examples of the cyclic carbonic acid ester include propylene carbonate, ethylene carbonate, and butylene carbonate.

Examples of the chain carbonic acid ester include dimethyl carbonate, methyl ethyl carbonate, diethyl carbonate, methyl-n-propyl carbonate, ethyl-n-propyl carbonate, and di-n-propyl carbonate.

Examples of the chain carboxylic acid ester include methyl acetate, ethyl acetate, propyl acetate, and methyl propionate.

Examples of the cyclic ether include tetrahydrofuran, tetrahydropyran, 1,3-dioxolane, and 1,4-dioxane.

Examples of the chain ether include dimethoxymethane, and 1,2-dimethoxyethane.

Examples of the phosphoric acid ester include trimethyl phosphate, triethyl phosphate, ethyl dimethyl phosphate, diethyl methyl phosphate, tripropyl phosphate, tributyl phosphate, tri(trifluoromethyl) phosphate, tri(trichloromethyl) phosphate, tri(trifluoroethyl) phosphate, tri(triperfluoroethyl) phosphate, 2-ethoxy-1,3,2-dioxaphosphoran-2-one, 2-trifluoroethoxy-1,3,2-dioxaphosphoran-2-one, and 2-methoxyethoxy-1,3,2-dioxaphosphoran-2-one.

Examples of the nitrile compound include acetonitrile. Examples of the amide compound include DMF. Examples of the sulfone include dimethyl sulfone, and diethyl sulfone.

The non-aqueous solvents may be used alone, or in combination of two or more thereof.

Among the non-aqueous solvents, the lactone compound, the cyclic carbonic acid ester, the chain carbonic acid ester, and the phosphoric acid ester are preferable from the viewpoint of battery output and charge-discharge cycle characteristics, the lactone compound, the cyclic carbonic acid ester, and the chain carbonic acid ester are more preferable, and a liquid mixture of the cyclic carbonic acid ester and the chain carbonic acid ester is particularly preferable. A liquid mixture of the ethylene carbonate (EC) and the dimethyl carbonate (DMC), or a liquid mixture of the ethylene carbonate (EC) and the propylene carbonate (PC) is most preferable.

The positive electrode active material layer 13 may contain a conductive auxiliary agent.

As the conductive auxiliary agent, a conductive material that is the same as the conductive filler contained in the positive electrode current collector 11 can be suitably used.

The weight ratio of the conductive auxiliary agent in the positive electrode active material layer 13 is preferably 3% to 10% by weight.

The positive electrode active material layer 13 can be prepared, for example, by a method of applying a mixture containing the positive electrode active material and the electrolytic solution to the surface of the positive electrode current collector 11 or a base material, and removing an excess electrolytic solution, a method of applying pressure to a mixture containing the positive electrode active material and the electrolytic solution on a base material to form the positive electrode active material layer, and the like.

In the case where the positive electrode active material layer 13 is formed on the surface of the base material, the positive electrode active material layer 13 may be combined with the positive electrode current collector 11 by a method such as transfer.

The above-described mixture may contain the conductive auxiliary agent and the adhesive resin as necessary. Further, the positive electrode active material may also be a coated positive electrode active material.

The thickness of the positive electrode active material layer 13 is not particularly limited, and is preferably 150 to 600 μm, and more preferably 200 to 450 μm from the viewpoint of battery performance.

(Negative Electrode Current Collector)

As the negative electrode current collector 21, one having the same configuration as that described for the positive electrode current collector 11 can be appropriately selected and used, and can be obtained by the same method.

The negative electrode current collector 21 is preferably a resin current collector from the viewpoint of battery characteristics and the like.

The thickness of the negative electrode current collector 21 is not particularly limited, and is preferably 5 to 150 μm.

(Negative Electrode Active Material Layer)

The negative electrode active material layer 23 is preferably a non-bound body of a mixture containing a negative electrode active material. The reason why the negative electrode active material layer is preferably a non-bound body, the method of obtaining the negative electrode active material layer 23, which is a non-bound body, and the like are the same as the reason why the positive electrode active material layer 13 is preferably a non-bound body and the method of obtaining the positive electrode active material layer 13, which is a non-bound body.

Examples of the negative electrode active material include carbon-based materials [such as graphite, non-graphitizable carbon, amorphous carbon, and resin burned bodies (for example, burned and carbonized phenol resin, and furan resin), cokes (for example, pitch coke, needle coke, and petroleum coke), and carbon fiber], silicon-based materials [such as silicon, silicon oxide (SiOx), silicon-carbon complexes (such as complexes in which the surfaces of carbon particles are coated with silicon and/or silicon carbide, complexes in which the surfaces of silicon particles or silicon oxide particles are coated with carbon and/or silicon carbide, and silicon carbide), silicon alloys (such as a silicon-aluminum alloy, a silicon-lithium alloy, a silicon-nickel alloy, a siliconiron alloy, a silicon-titanium alloy, a silicon-manganese alloy, a silicon-copper alloy, and a silicon-tin alloy), and the like], conductive polymers (for example, polyacetylene, and polypyrrole), metals (such as tin, aluminum, zirconium, and titanium), metal oxides (such as titanium oxide and lithium-titanium oxide), and metal alloys (for example, a lithium-tin alloy, a lithium-aluminum alloy, and a lithium-aluminum-manganese alloy), and mixtures thereof with carbon-based materials.

Among the above-described negative electrode active materials, those that do not contain lithium or lithium ions thereinside may be subjected to a pre-doping treatment in which a part or all of the negative electrode active material is pre-doped with lithium or lithium ions in advance.

Among these, from the viewpoint of battery capacity, or the like, the carbon-based materials, the silicon-based materials, and the mixtures thereof are preferable, as the carbon-based material, graphite, non-graphitizable carbon, and amorphous carbon are more preferable, and as the silicon-based material, silicon oxide and silicon-carbon complexes are even more preferable.

The volume average particle diameter of the negative electrode active material is preferably 0.01 to 100 μm, more preferably 0.1 to 20 μm, and even more preferably 2 to 10 μm from the viewpoint of electric properties of the battery.

In the present specification, the volume average particle diameter of the negative electrode active material means the particle diameter at an integrated value of 50% (Dv50) in a particle size distribution determined by the microtrack method (laser diffraction scattering method). The microtrack method is a method of determining the particle size distribution while using the scattered light obtained by irradiating particles with laser light. Incidentally, for the measurement of the volume average particle diameter, a microtrack manufactured by NIKKISO CO., LTD., or the like can be used.

The negative electrode active material may be a coated negative electrode active material having at least a part of its surface coated with a coating material containing a polymer compound.

When the periphery of the negative electrode active material is coated with the coating material, the change in volume of the negative electrode is mitigated, thereby making it possible to suppress the expansion of the negative electrode.

As the coating material, the same one as the coating material constituting the coated positive electrode active material can be suitably used.

The negative electrode active material layer 23 contains an electrolytic solution containing an electrolyte and a non-aqueous solvent.

As the composition of the electrolytic solution, the same electrolytic solution as that contained in the positive electrode active material layer 13 can be suitably used.

The negative electrode active material layer 23 may contain a conductive auxiliary agent.

As the conductive auxiliary agent, the same conductive material as the conductive filler contained in the positive electrode active material layer 13 can be suitably used.

The weight ratio of the conductive auxiliary agent in the negative electrode active material layer 23 is preferably 2% to 10% by weight.

The negative electrode active material layer 23 may contain an adhesive resin.

As the adhesive resin, the same one as the adhesive resin, which is an arbitrary component of the positive electrode active material layer 13, can be suitably used.

The negative electrode active material layer 23 can be prepared, for example, by applying a mixture containing the negative electrode active material and the electrolytic solution to the surface of the negative electrode current collector 21 or a base material, and removing an excess electrolytic solution.

In the case where the negative electrode active material layer 23 is formed on the surface of the base material, the negative electrode active material layer 23 may be combined with the negative electrode current collector 21 by a method such as transfer.

The above-described mixture may contain the conductive auxiliary agent, the adhesive resin, and the like, as necessary. In addition, the negative electrode active material may also be a coated negative electrode active material.

The thickness of the negative electrode active material layer 23 is not particularly limited, and is preferably 150 to 600 μm, and more preferably 200 to 450 μm from the viewpoint of battery performance.

(Separator)

Examples of the separator 30 include known separators to be used for a lithium ion cell such as a porous film formed of polyethylene or polypropylene, a laminated film of the above-described porous films (such as a laminated film of a porous polyethylene film and porous polypropylene), a non-woven fabric formed of synthetic fibers (such as polyester fibers and aramid fibers), glass fibers, or the like, and those made by attaching ceramic fine particles such as silica, alumina, or titania to surfaces thereof.

(Lithium Ion Cell)

The lithium ion cell 100 has a configuration in which an electrolytic solution is enclosed by sealing the outer peripheries of the positive electrode active material layer 13 and the negative electrode active material layer 23.

As a method of sealing the outer peripheries of the positive electrode active material layer 13 and the negative electrode active material layer 23, for example, a method of sealing the outer peripheries with a sealing material 40 can be adopted.

The sealing material 40 is arranged between the positive electrode current collector 11 and the negative electrode current collector 21, and has a function of sealing the outer periphery of the separator 30.

The sealing material 40 is not particularly limited as long as the material is a material durable against the electrolytic solution, and polymer materials (such as an epoxy-based resin, a polyolefin-based resin, a polyurethane-based resin, and a polyvinylidene fluoride resin) are preferable. Among these, from the viewpoint of high durability and easy handling, the epoxy-based resin is more preferable. In addition, as the sealing material 40, a frame-shaped material (hereinafter, also referred to as a frame-shaped sealing material) provided with a through hole, in which the positive electrode active material layer 13 or the negative electrode active material layer 23 is housed, at the central portion of a sheet formed of a material durable against the above-described electrolytic solution or the like may be used.

As a method of manufacturing the lithium ion cell 100, for example, the lithium ion cell can be obtained by overlapping the positive electrode current collector 11, the positive electrode active material layer 13, the separator 30, the negative electrode active material layer 23, and the negative electrode current collector 21 in this order, injecting the electrolytic solution, and sealing the outer peripheries of the positive electrode active material layer 13 and the negative electrode active material layer 23 with the sealing material 40. As a method of sealing the outer peripheries of the positive electrode active material layer 13 and the negative electrode active material layer 23 with the sealing material 40, a method of applying and curing a liquid sealing material to perform sealing can be adopted.

In addition, in the case where the sealing material 40 is a frame-shaped sealing material, for example, after the positive electrode current collector 11 is joined to one frame surface of the frame-shaped sealing material to seal one end of the through hole, a mixture containing the positive electrode active material and the electrolytic solution is applied to the through hole of the frame-shaped sealing material to form the positive electrode active material layer 13. On the other hand, after the negative electrode current collector 21 is joined to the frame surface of another frame-shaped sealing material to seal one end of the through hole, a mixture containing the negative electrode active material and the electrolytic solution is applied to the through hole of the frame-shaped sealing material to form the negative electrode active material layer 23. Next, the lithium ion cell 100 can be obtained by a method in which a separator is inserted onto a frame surface to which the current collector of the frame-shaped sealing material is not joined, and the frame-shaped sealing materials are bonded to each other so that the positive electrode active material layer 13 and the negative electrode active material layer 23 face to each other while sandwiching the separator therebetween to perform sealing.

[Lithium Ion Battery Module]

A lithium ion battery module of the present invention is configured by using the above-mentioned lithium ion cell 100.

Hereinafter, a first aspect and a second aspect of the lithium ion battery module of the present invention will be described.

[First aspect of Lithium Ion Battery Module]

In the first aspect of the lithium ion battery module of the present invention, it is preferable that a battery outer container in which the power storage element is housed is provided, the battery outer container includes the first metal sheet and the second metal sheet, and the first metal sheet and the second metal sheet each have a contact surface in contact with the elastic member, and an exposed surface exposed to the outside of the battery outer container.

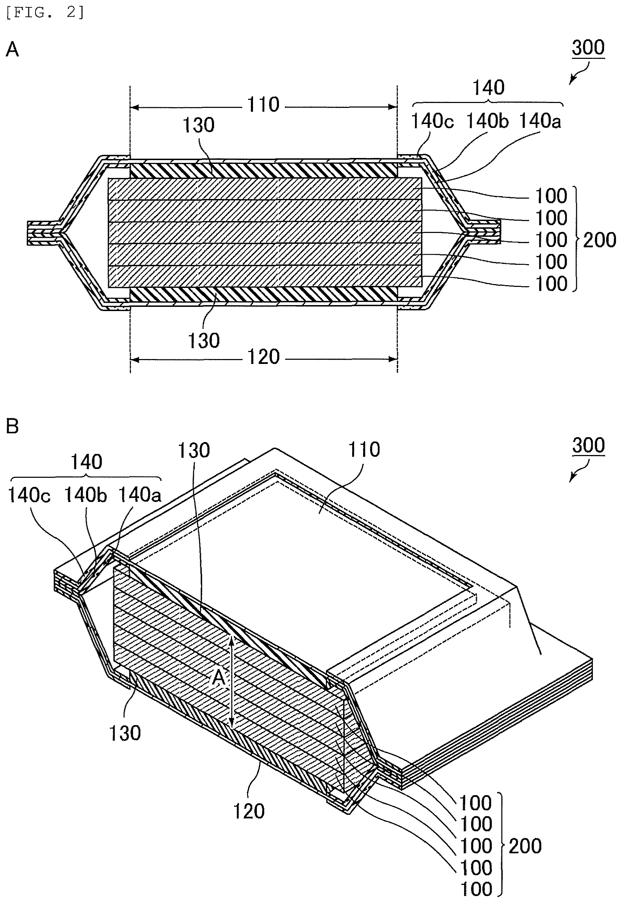

FIG. 2A is a cross-sectional view schematically showing an example of the first aspect of the lithium ion battery module, and FIG. 2B is a perspective cross-sectional view schematically showing the example of the first aspect of the lithium ion battery module.

In a lithium ion battery module 300 shown in FIG. 2A, a battery outer container 140 in which the power storage element 200 is housed is provided, and a conductive elastic member 130 arranged between the positive electrode current collector of the outermost layer of the power storage element 200 and the battery outer container 140, and/or between the negative electrode current collector of the outermost layer of the power storage element 200 and the battery outer container 140 is provided.

The battery outer container 140 has a resin layer 140a, a metal layer 140b, and a resin layer 140c in this order from the inside.

The metal layer 140b has a contact surface in contact with the elastic member 130 and an exposed surface exposed to the outside of the battery outer container 140, and a range in which the contact surface and the exposed surface overlap in the lamination direction is a first metal sheet 110 or a second metal sheet 120.

Specifically, as shown in FIG. 2B, a range in which the contact surface of the metal layer 140b in contact with the elastic member 130 between the positive electrode current collector of the outermost layer of the power storage element 200 and the battery outer container 140, and the exposed surface exposed to the outside (positive electrode side) of the battery outer container 140 overlap in a lamination direction A is the first metal sheet 110. In addition, a range in which the contact surface of the metal layer 140b in contact with the elastic member 130 between the negative electrode current collector of the outermost layer of the power storage element 200 and the battery outer container 140 and the exposed surface exposed to the outside (negative electrode side) of the battery outer container 140 overlap in the lamination direction A is the second metal sheet 120.

The resin layer 140a and the resin layer 140c have a role as an insulating layer, and the first metal sheet 110 and the second metal sheet 120 are insulated from each other.

Since the lithium ion battery module 300 has such a configuration, the current collector on the outermost layer of the power storage element can be connected to a portion that extracts a current to the outside (the first metal sheet 110 and the second metal sheet 120) without causing contact failure even when the power storage element is distorted or the thickness of the electrode is uneven, and further, a current can be extracted without drawing out the electrode terminal from the battery outer container. Hereinafter, each configuration of the lithium ion battery module 300 will be described.

(Power Storage Element)

The power storage element 200 includes a lithium ion cell 100.

The power storage element 200 may have a configuration including one lithium ion cell 100, or may have a configuration in which a plurality of lithium ion cells 100 are laminated in series.

From the viewpoint of improving the output of the lithium ion battery module, the power storage element 200 preferably has a configuration in which a plurality of lithium ion cells 100 are laminated in series, and for example, a configuration in which five or more lithium ion cells 100 are laminated in series is preferable, and a configuration in which seven or more lithium ion cells 100 are laminated in series is more preferable.

In the case where the power storage element 200 has a configuration in which a plurality of lithium ion cells 100 are laminated in series, it is preferable that the lithium ion cells are laminated such that contact the positive electrode of one adjacent lithium ion cell 100 and the negative electrode of the other lithium ion cell 100 come into contact with each other, that is, each lithium ion cell 100 is directed in the same direction. In the case where the power storage element 200 is formed by laminating a plurality of lithium ion cells 100 to be directed in the same direction, it is preferable that when any of the lithium ion cells 100 included in the power storage element 200 is defective, a normal power storage element 200 can be obtained by simply replacing only the defective lithium ion cell 100 without performing work for reconnecting the terminal or the like.

(Battery Outer Container)

The battery outer container 140 has a resin layer 140a, a metal layer 140b, and a resin layer 140c in this order from the inside. The resin layer 140a may be arranged so as to electrically insulate the metal layers 140b on the upper side and the lower side in the lamination direction, and the resin layer 140c may be arranged as necessary according to the size of the exposed surface of the metal layers 140b arranged on the upper side and the lower side in the lamination direction.

As such a battery outer container, for example, a polymer metal composite film used for a composite material of a metal sheet and a polymer sheet, a laminated container, or the like, a metal can case, or the like can be used.

In the battery outer container 140, the metal layer 140b has a contact surface in contact with the elastic member 130 and an exposed surface exposed to the outside of the battery outer container, and a range in which the contact surface and the exposed surface overlap in the lamination direction is the first metal sheet 110 or the second metal sheet 120.

The resin layer 140a is preferably a heat-fusible resin film.

As the heat-fusible resin film, for example, a film made of a heat-fusible resin such as polyethylene (PE), polypropylene (PP), modified polyethylene, modified polypropylene, ionomer, or ethylene vinyl acetate (EVA) can be used.

The heat-fusible resin film also acts as a sealing layer when the power storage element 200 is housed in the container. In addition, since the heat-fusible resin film has a role as an insulating layer, the first metal sheet 110 and the second metal sheet 120 are insulated from each other.

The thickness of the resin layer 140a is not particularly limited, and is, for example, 10 $\mu$m to 1000 $\mu$m.

As the metal layer 140b, for example, a metal foil, a metal sheet, or the like can be used, and as the metal, aluminum, nickel, stainless steel, copper, or the like can be used.

The thickness of the metal layer 140b is not particularly limited, and is, for example, 10 $\mu$m to 300 $\mu$m.

As the resin layer 140c, a film of polyester such as polyethylene terephthalate (PET), the heat-fusible resin film exemplified in the resin layer 140a, and a resin sheet such as a polyamide-based synthetic fiber such as polyamide (Nylon (registered trademark)) fiber or the like can be used.

The thickness of the resin layer 140c is not particularly limited, and is, for example, 10 $\mu$m to 1000 $\mu$m.

The metal layer 140b imparts moisture, air permeability resistance, and chemical resistance to the battery outer container 140, and the resin layer 140c is a layer that limits the exposed surface of the metal layer 140b to prevent a short circuit from occurring outside the lithium ion cell 100.

Examples of a specific configuration of the battery outer container 140 include a configuration in which polyethylene (PE), an aluminum foil, and polyethylene terephthalate (PET) are laminated in this order from the inside; a configuration in which polyethylene (PE), an aluminum foil, and Nylon (registered trademark) are laminated; a configuration in which an ionomer, a nickel foil, and polyethylene terephthalate (PET) are laminated; a configuration in which ethylene vinyl acetate (EVA), an aluminum foil, and polyethylene terephthalate (PET) laminated; and a configuration in which an ionomer, an aluminum foil, and polyethylene terephthalate (PET) are laminated.

In the battery outer container 140, by performing a solvent treatment, a heat treatment, a flame treatment, and the like on the resin layer 140a and the resin layer 140c, the contact surface in contact with the elastic member 130 and the exposed surface exposed to the outside of the battery outer container can be formed in the metal layer 140b.

For example, the metal layer 140b can be exposed by subjecting the above-mentioned heat-fusible resin to a high temperature treatment using an organic solvent such as toluene, perchloroethylene, trichlorethylene, and carbon tetrachloride.

In addition, for example, the metal layer 140b can be exposed by treating the above-mentioned polyester film or resin sheet such as a polyamide-based synthetic fiber with an organic solvent such as cresol.

Further, the battery outer container 140 in which the contact surface in contact with the elastic member 130 and the exposed surface exposed to the outside of the battery outer container can also be obtained by laminating a heat-fusible resin film formed so as to have a predetermined arrangement to be the resin layer 140a and a resin sheet that becomes the resin layer 140c on a metal foil and a metal sheet that become the metal layer 140b.

In the battery outer container 140, the metal layer 140b has a contact surface in contact with the elastic member 130 and an exposed surface exposed to the outside of the battery outer container, and a range in which the contact surface and the exposed surface overlap in the lamination direction is the first metal sheet 110 or the second metal sheet 120.

The first metal sheet 110 functions as a positive electrode terminal, and the second metal sheet 120 functions as a negative electrode terminal, so that a current can be directly extracted.

In the lithium ion battery module 300, the ratio of the area of the first metal sheet 110 to the area of the positive electrode current collector on the outermost layer of the power storage element 200, and the ratio of the area of the second metal sheet 200 to the area of the negative electrode current collector of the outermost layer of the power storage element are respectively preferably 70% or more, more preferably 80% or more, even more preferably 85% or more, and particularly preferably 90% or more.

Since the first metal sheet 110 and the second metal sheet 120 have such an area ratio, the current can be suitably extracted from the lithium ion battery module 300.

As shown in FIG. 2B, the area of the first metal sheet 110 means the area of a range in which the contact surface of the metal layer 140b in contact with the elastic member 130 between the positive electrode current collector of the outermost layer of the power storage element 200 and the battery outer container 140, and the exposed surface exposed to the outside (positive electrode side) of the battery outer container 140 overlap in a lamination direction A. The area of the second metal sheet 120 means the area of a range in which the contact surface of the metal layer 140b in contact with the elastic member 130 between the negative electrode current collector of the outermost layer of the power storage element 200 and the battery outer container 140 and the exposed surface exposed to the outside (negative electrode side) of the battery outer container 140 overlap in the lamination direction A.

(Elastic Member)

The elastic member 130 is not limited as long as the elastic member is an elastic body having conductivity to achieve electrical connection between the metal sheet 110 and the power storage element 200, and between the second metal sheet 120 and the power storage element 200, and having flexibility to be deformable by the stress applied to the power storage element 200 by housing the power storage element 200 in the battery outer container 140. For example, an elastic body formed of a metal or metal fiber can be suitably used.

As the metal constituting the elastic member 130, at least one metal selected from the group consisting of nickel, titanium, aluminum, copper, platinum, iron, chromium, tin, zinc, indium, antimony, and potassium, or alloys containing these metals can be used.

By using these metals as the elastic member 130, high electrical conductivity can be obtained.

As the elastic member 130, for example, an elastic body in which a conductive carbon material is supported on woven or non-woven fabrics of plant fibers and/or nonmetal fibers (such as glass fibers, and carbon fibers) by mixing or coating can be used.

As the conductive carbon material, at least one or more can be selected from carbon black, acetylene black, carbon nanotubes, carbon fibers, lignin black, graphite, and graphene.

Further, a woven or non-woven fabric formed of carbon fibers, or a conductive carbon sheet such as sheetshaped graphite (also referred to as a graphite sheet) can be used.

Among these, a graphite sheet is preferable from the viewpoint of being able to suitably absorb the distortion of the power storage element 200 and having high electrical conductivity.

Further, as the elastic member 130, an elastic body obtained by mixing the above-described conductive carbon material or metal with a polymer material having elasticity, and an elastic body obtained by applying the above-described conductive carbon material or metal to the surface of a polymer material having elasticity can be used.

As the polymer material having elasticity, silicone rubber, fluorine rubber, epichlorohydrin rubber, acrylic rubber, ethylene acrylic rubber, urethane rubber, nitrile rubber, hydrogenated nitrile rubber, chlorosulfonated polyethylene, chloroprene rubber, ethylene-propene-dene rubber (EPDM), ethylene rubber, propylene rubber, butyl rubber, butadiene rubber, styrene-butadiene rubber, natural rubber, polyisobutylene, chlorinated polyethylene, isoprene rubber, expanded polypropylene, expanded polyethylene, and expanded polyurethane can be used.

The ratio of the area of the elastic member 130 to the area of the positive electrode current collector on the outermost layer of the power storage element 200 or the negative electrode current collector on the outermost layer of the power storage element 200 is preferably 70% or more.

When the elastic member 130 has such an area ratio, it is possible to suitably prevent contact failure due to distortion of the power storage element 200 and unevenness of the thickness of the electrodes. Further, the surface of the lithium ion battery module 300 that functions as a positive electrode and the surface that functions as a negative electrode can be smoothed.

The ratio of the area of the elastic member 130 is more preferably 80% or more, even more preferably 85% or more, and particularly preferably 90% or more.

The thickness of the elastic member 130 is not particularly limited, and may be any thickness as long as the elastic member is in contact with both the metal layer of the battery outer container 140 and the positive electrode current collector or the negative electrode current collector of the outermost layer of the power storage element 200. The thickness is, for example, 50 μm to 500 μm.

The elastic modulus of the elastic member 130 is preferably, for example, 0.01 to 50 MPa/mm at 25°C.

For example, in the case where the elastic modulus of the elastic member 130 is smaller than 0.01 MPa/mm, the elastic member 130 may be deformed, and in the case where the elastic modulus is more than 50 MPa/mm, the followability to the contact surface with the power storage element 200 may decrease.

The elastic modulus of the elastic member 130 can be obtained by a conventionally known elastic modulus measuring method. For example, using a load tester (a test device having an accuracy of the first grade or higher of the force measurement system specified in 4. (Classification of tester) of JIS K 6272 is used, for example, a tensile compression tester SDWS manufactured by Imada Seisakusho Co., Ltd.), the elastic modulus can be obtained by a method of calculating an elastic modulus from the displacement amount when a predetermined load is applied to the elastic member 130. In the case where the elastic member 130 is rubber, the elastic modulus can be obtained by the method A described in JIS K 6254: 2010. Further, the allowable strain of the elastic member 130 is preferably, for example, 30% to 99%.

(Method of Manufacturing Example of First Aspect of Lithium Ion Battery Module)

As a method of manufacturing the lithium ion battery module 300, for example, the lithium ion battery module can be obtained by after overlapping the elastic member 130, the power storage element 200, and the elastic member 130 in this order, housing these components in the battery outer container 140 including the first metal sheet 110 and the second metal sheet 120, and performing sealing.

The battery outer container 140 can be sealed by using heat fusion such as heat sealing, impulse sealing, ultrasonic fusion, high frequency fusion and the like.

[Second Aspect of Lithium Ion Battery Module]

It is preferable that a second aspect of the lithium ion battery module of the present invention includes a battery outer container in which a first metal sheet, a power storage element and a second metal sheet are housed, and a part of the metal sheet constituting the first metal sheet and a part of the metal sheet constituting the second metal sheet penetrate the battery outer container as metal members and are drawn out to the outside of the battery outer container, or the metal members connected to the first metal sheet and the second metal sheet penetrate the battery outer container and are drawn out to the outside of the battery outer container.

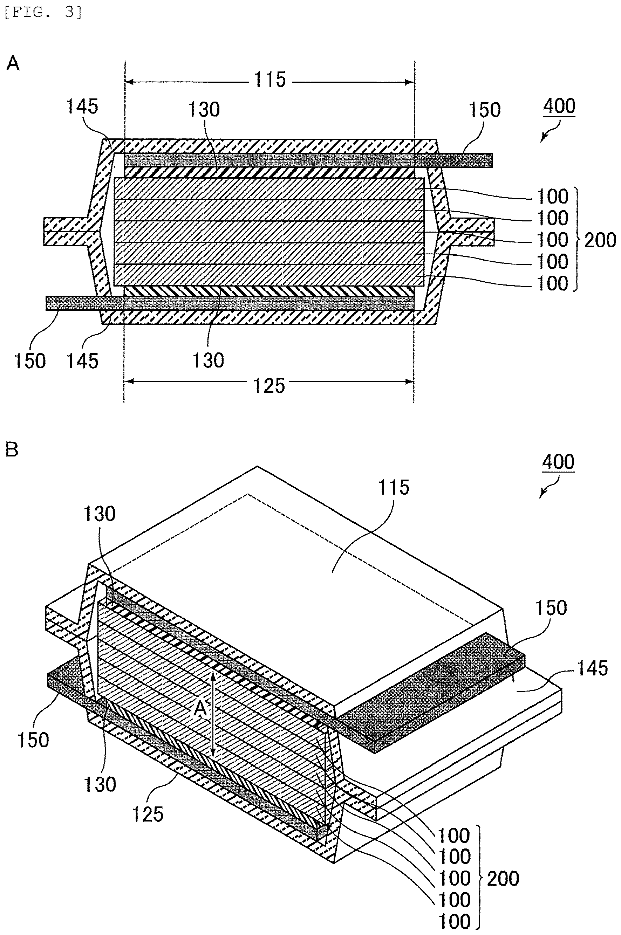

FIG. 3A is a cross-sectional view schematically showing an example of a second aspect of the lithium ion battery module, and FIG. 3B is a perspective cross-sectional view schematically showing the example of the second aspect of the lithium ion battery module.

A lithium ion battery module 400 shown in FIG. 3A includes a battery outer container 145 in which a first metal sheet 115, a power storage element 200, and a second metal sheet 125 are housed.

Specifically, as shown in FIG. 3B, a range of the contact surface of the metal sheet in contact with the elastic member 130 between the positive electrode current collector of the outermost layer of the power storage element 200 and a battery outer container 145 is the first metal sheet 115, and a range of the contact surface of the metal sheet in contact with the elastic member 130 between the negative electrode current collector of the outermost layer of the power storage element 200 and the battery outer container 145 is the second metal sheet 125. Then, in the lithium ion battery module 400, a part of the metal sheet constituting the first metal sheet 115 and a part of the metal sheet constituting the second metal sheet 125 penetrate the battery outer container 145 as metal members 150 and are drawn out to the outside of the battery outer container 145, or the metal members 150 connected to the first metal sheet 115 and the second metal sheet 125 penetrate the battery outer container 145 and are drawn out to the outside of the battery outer container 145.

In the lithium ion battery module 400, the first metal sheet 115, the second metal sheet 125, and the battery outer container 145 are separate members.

Further, an insulating layer (not shown) is formed on the inner surface of the battery outer container 145, and the first metal sheet 115 connected to the positive electrode current collector of the outermost layer of the power storage element 200 (via a conductive elastic member) and the second metal sheet 125 connected to the negative electrode current collector of the outermost layer of the power storage element 200 (via a conductive elastic member) are insulated from each other.

Since the lithium ion battery module 400 has such a configuration, the current collector on the outermost layer of the power storage element 200 can be connected to a portion that extracts a current to the outside (the first metal sheet 115 and the second metal sheet 125) without causing contact failure even when the power storage element 200 is distorted or the thickness of the electrode is uneven.

Hereinafter, each configuration of the lithium ion battery module 400 will be described.

(Metal Sheet)

The first metal sheet 115 and the second metal sheet 125 are not particularly limited as long as the metal sheets are sheets formed of a conductive material, and metal materials such as copper, aluminum, titanium, stainless steel, nickel, and alloys thereof, and the materials described as the resin current collector can be appropriately selected and used.

In the lithium ion battery module 400, a part of the metal sheet constituting the first metal sheet 115 and a part of the metal sheet constituting the second metal sheet 125 may penetrate the battery outer container 145 as the metal members 150 and may be drawn out to the outside of the battery outer container 145, or the metal members 150 connected to the first metal sheet 115 and the second metal sheet 125 may penetrate the battery outer container 145 and may be drawn out to the outside of the battery outer container 145.

In the lithium ion battery module 400, the metal member 150 that is a part of the metal sheet constituting the first metal sheet 115 or another metal member 150 connected to the first metal sheet 115 functions as a positive electrode terminal.

Further, the metal member 150 that is a part of the metal sheet constituting the second metal sheet 125 or another metal member 150 connected to the second metal sheet 125 functions as a negative electrode terminal.

The other metal member 150 connected to the first metal sheet 115 or the second metal sheet 125 is not particularly limited, and a known lead wire or metal tab can be appropriately selected and used.

The ratio of the area of the first metal sheet 115 to the area of the positive electrode current collector on the outermost layer of the power storage element 200, and the ratio of the area of the second metal sheet 125 to the area of the negative electrode current collector on the outermost layer of the power storage element 200 are respectively preferably 70% or more, more preferably 80% or more, even more preferably 85% or more, and particularly preferably 90% or more.

Since the first metal sheet 115 and the second metal sheet 125 have such an area ratio, the current can be suitably extracted from the lithium ion battery module 400.

In the lithium ion battery module 400, as shown in FIG. 3B, the area of the first metal sheet 115 is the area of the contact surface in contact with the elastic member 130 between the positive electrode current collector of the outermost layer of the power storage element 200 and the battery outer container 145, and the area of the second metal sheet 125 is the area of the contact surface in contact with the elastic member 130 between the negative electrode current collector of the outermost layer of the power storage element 200 and the battery outer container 145.

The thickness of the first metal sheet 115 and the second metal sheet 125 is preferably 20 to 80 $\mu$m from the viewpoint of suitably extracting a current.

(Battery Outer container)

The battery outer container 145 can be formed by molding a base material used for a known metal can case, and the polymer metal composite film used for the composite material of the metal sheet and the polymer sheet, the laminated container, and the like described in the first aspect of the lithium ion battery module described above into a predetermined shape or the like.

However, in the battery outer container 145, it is not necessary to provide the contact surface of the metal sheet in contact with the elastic member 130 or the exposed surface of the metal sheet exposed to the outside of the battery outer container 145.

Further, an insulating layer (not shown) formed of a resin layer is formed on the inner surface of the battery outer container 145, and the metal members 150 that penetrate the battery outer container 145 and are drawn out to the outside to function as a positive electrode terminal and a negative electrode terminal are insulated from each other.

In the battery outer container 145, the metal member 150 that functions as a positive electrode terminal or a negative electrode terminal penetrates the battery outer container 145 and is drawn out to the outside of the battery outer container 145.

Such a portion penetrating the battery outer container 145 can be formed by performing machining or the like. In the case where the battery outer container 145 includes a plurality of members formed of the base material, the composite material, the polymer metal composite film, or the like, the metal member can be drawn out by using a joint portion between the members constituting the battery outer container 145 as a portion penetrating the battery outer container 145. Further, in the case where the battery outer container 145 has an opening portion for housing the power storage element 200 or the like, the opening portion can be set as a portion penetrating the battery outer container 145 and the metal member can be drawn out.

In addition, the expression "penetrating and being drawn out to the outside of the battery outer container 145" also includes a case where the first metal sheet 115 and the second metal sheet 125, or the metal member connected to the first metal sheet 115 and the metal member connected to the second metal sheet 125 are drawn out to the outside of the battery outer container 145 from the sealing portion of the battery outer container 145 when the battery outer container 145 is sealed.

(Others)

In the second aspect of the lithium ion battery module, the power storage element 200 and the elastic member 130 can be appropriately selected and used in the same manner as those described in the first aspect of the lithium ion battery module of the present invention.

(Method of Manufacturing Second Aspect of Lithium Ion Battery Module)

As a method of manufacturing the lithium ion battery module 400, for example, the lithium ion battery module can be obtained by overlapping the first metal sheet 115, the elastic member 130, the power storage element 200, the elastic member 130, and the second metal sheet 125 in this order, housing the components in the battery outer container 145 having a penetration portion formed in advance as necessary, drawing out the metal member 150 that functions as a positive electrode terminal or a negative electrode terminal from the penetration portion of the battery outer container 145, and then performing sealing.
The battery outer container 145 can be sealed by using heat fusion such as heat sealing, impulse sealing, ultrasonic fusion, high frequency fusion and the like.

[Battery Pack]

A battery pack means a battery system in which a plurality of battery modules are connected in series or in parallel for the purpose of adjusting the capacity and voltage as a power supply according to the application, and the like, and in addition to the battery module, a charge or discharge control circuit or the like may be combined.

(First Aspect of Battery Pack)

A first aspect of the battery pack of the present invention includes a plurality of lithium ion battery modules, and has a configuration in which positive electrodes and negative electrodes of the lithium ion battery modules are connected in series.

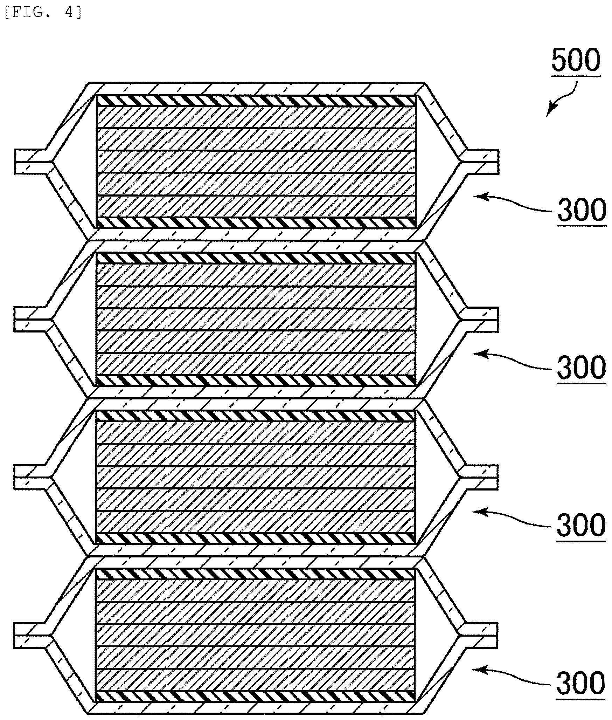

FIG. 4 is a cross-sectional view schematically showing an example of the first aspect of the battery pack.
A battery pack 500 shown in FIG. 4 includes a plurality of lithium ion battery modules 300, which are the lithium ion battery modules of the first aspect described above, and the positive electrode and the negative electrode of the lithium ion battery module 300 are connected in series.
In the battery pack 500, the lithium ion battery modules 300 are laminated such that the positive electrode terminal of one adjacent lithium ion battery module 300 and the negative electrode terminal of another lithium ion battery module 300 come into contact with each other, that is, the directions of the power storage elements 200 in each lithium ion battery module 300 are matched.
Since the battery pack 500 has such a configuration, the output can be increased.
Since the lithium ion battery module 300 has the exposed surface in which the metal sheet electrically connected to the current collector is exposed to the outside of the battery outer container, the lithium ion battery modules 300 can be easily connected in series to form a battery pack 500 without requiring a special member by simply laminating the plurality of lithium ion battery modules 300 and bring the exposed surfaces into contact with each other.
From the viewpoint of improving the output of the battery pack, for example, a configuration in which five or more lithium ion battery modules 300 are connected in series is preferable, and a configuration in which seven or more lithium ion battery modules are connected in series is more preferable.
Further, since the exposed surface functioning as the positive electrode and the exposed surface functioning as the negative electrode of the lithium ion battery module 300 are smooth, even when the lithium ion battery modules 300 are connected in series, the electrical connection is good.
Since the battery pack 500 is formed by laminating the lithium ion battery modules without using a member for connecting the plurality of lithium ion battery modules 300, even when one of the lithium ion battery modules 300 is defective, by simply replacing the defective product without rewiring between the lithium ion battery modules 300, the rest good products can be used as they are, which is excellent in maintainability and economical efficiency.
Although FIG. 4 shows the battery pack having a configuration including a plurality of lithium ion battery modules 300, a configuration in which the battery pack includes a plurality of lithium ion battery modules 400 and the positive electrodes and the negative electrodes of the lithium ion battery modules 400 are connected in series may be adopted.

(Second Aspect of Battery Pack)

A second aspect of the battery pack of the present invention includes a plurality of lithium ion battery modules, and has a configuration in which the positive electrodes and the negative electrodes of the lithium ion battery modules are connected in parallel.

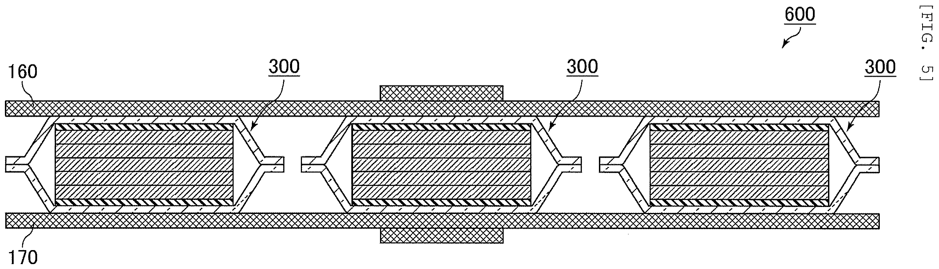

FIG. 5 is a cross-sectional view schematically showing an example of the second aspect of the battery pack.

A battery pack 600 shown in FIG. 5 includes a plurality of lithium ion battery modules 300, which are the lithium ion battery modules of the first aspect described above, and the electrodes of the lithium ion battery modules are connected in parallel such that a surface functioning as the positive electrode of the lithium ion battery module 300 is arranged on a positive electrode current collector plate 160 side, and a surface functioning as the negative electrode is arranged on a negative electrode current collector plate 170 side.

Since the battery pack 600 has such a configuration, the battery pack can be used as a high capacity power supply.

Since the metal sheet (110 and 120) electrically connected to the current collector has an exposed surface exposed on the outside of the battery outer container 140 in the lithium ion battery module 300, in the battery pack 600, the lithium ion battery modules 300 can be connected in parallel to form a battery pack with a simple configuration by using the positive electrode current collector 160 and the negative electrode current collector plate 170 and sandwiching lithium ion battery modules 300 between the positive electrode current collector and the negative electrode current collector plate.

From the viewpoint of improving the service life of the battery pack, for example, a configuration in which five or more lithium ion battery modules 300 are connected in parallel is preferable, and a configuration in which seven or more lithium ion battery modules are connected in parallel is more preferable.

Further, since the exposed surface functioning as the positive electrode and the exposed surface functioning as the negative electrode of the lithium ion battery module 300 are smooth, the electrical connection between the positive electrode of the lithium ion battery module 300 and the positive electrode current collector plate 160 and the electrical connection between the negative electrode and the negative electrode current collector plate 170 are good.

The materials constituting the positive electrode current collector plate 160 and the negative electrode current collector plate 170 are not particularly limited, and known highly conductive materials can be used for the current collector plate for lithium ion batteries.

As the constituent material of the current collector plate, for example, metal materials such as aluminum, copper, titanium, nickel, stainless steel (SUS), and alloys thereof are preferable.

From the viewpoint of light weight, corrosion resistance, and high conductivity, aluminum and copper are more preferable, and aluminum is particularly preferable.

The same material may be used for the positive electrode current collector plate 160 and the negative electrode current collector plate 170, or different materials may be used.

Since the battery pack 600 is formed by sandwiching the plurality of lithium ion battery modules 300 between the positive electrode current collector plate 160 and the negative electrode current collector plate 170, even when one of the lithium ion battery modules 300 is defective, the rest good products can be used as they are by simply replacing the defective product, which is excellent in maintainability and economical efficiency.

Although FIG. 5 shows the battery pack having a configuration including a plurality of lithium ion battery modules 300, a configuration in which the battery pack includes a plurality of lithium ion battery modules 400 and the positive electrodes and the negative electrodes of the lithium ion battery modules 400 are connected in parallel may be adopted.

Subsequently, another embodiment of the lithium ion battery module (hereinafter, also referred to as another embodiment of the lithium ion battery module) will be described.

Normally, when a power storage element in which lithium ion batteries are laminated is housed in a battery outer container to prepare a lithium ion battery module, work is performed in a reduced pressure environment in order to remove air, moisture, and the like.

In the laminate type battery (also referred to as a battery module) in which the plurality of bipolar batteries are laminated described in PTL 1, due to the effect of the uniformity of the thickness of the bipolar battery and the smoothness of the surface, and due to the reduced pressure when manufacturing a battery module by airtightly sealing the plurality of laminated bipolar batteries with the laminated sheet, the laminated sheet may be deformed (a part or all of the upper surface and the bottom surface of the battery module are recessed). Therefore, when a recess is generated in exposed conductive layer portion, in the case where the battery modules are laminated and connected, a gap may be formed between the electrodes to cause connection failure between the battery modules.

A lithium ion battery module according to another embodiment is a lithium ion battery module in which a power storage element in which a plurality of lithium ion cells laminated in series is housed in a battery outer container, in the lithium ion cell, a positive electrode current collector, a positive electrode active material layer, a separator, a negative electrode active material layer, and a negative electrode current collector are laminated in this order, the positive electrode current collector and the negative electrode current collector are provided as outermost layers, an electrolytic solution is enclosed by sealing outer peripheries of the positive electrode active material layer and the negative electrode active material layer, the battery outer container has a frame body that is hard and is thicker than a thickness of the power storage element in a lamination direction, a positive electrode terminal provided on an upper surface of the frame body, a negative electrode terminal provided on a bottom surface of the frame body, and an exterior material that covers an opening portion surrounded by the frame body, the power storage element is housed in the opening portion surrounded by the frame body so that the positive electrode current collector on the outermost layer is arranged on an upper surface side of the battery outer container, and the negative electrode current collector on the outermost layer is arranged on a bottom surface side of the battery outer container, and the opening portion is covered with the exterior material, a first current collector member is arranged between the positive electrode current collector on the outermost layer of the power storage element and the exterior material of the battery outer container, a second current collector member is arranged between the negative electrode current collector on the outermost layer of the power storage element and the exterior material of the battery outer container, the positive electrode terminal and the positive electrode current collector on the outermost layer of the power storage element are electrically connected via the first current collector member, and the negative electrode terminal and the negative electrode current collector on the outermost layer of the power storage element are electrically connected via the second current collector member.

Further, a battery pack related to the lithium ion battery module according to the other embodiment is a battery pack including a plurality of the lithium ion battery modules, in which the positive electrode terminal provided on the upper surface of the frame body of the lithium ion battery module overlaps the negative electrode terminal provided on the bottom surface of the frame body of the lithium ion battery module, and the positive electrodes and the negative electrodes of the lithium ion battery modules are connected in series, and a battery pack including a plurality of the lithium ion battery modules, in which the positive electrode terminals provided on the upper surfaces of the frame bodies of the lithium ion battery modules are connected to each other, the negative electrode terminals provided on the bottom surfaces of the frame bodies of the lithium ion battery modules are connected to each other, and the positive electrodes and the negative electrodes of the lithium ion battery modules are connected in parallel.

In the lithium ion battery module, even when a recess is generated in the upper surface and the bottom surface of the lithium ion battery module due to the reduced pressure during manufacturing the lithium ion battery module, contact failure does not occur in the case where the lithium ion battery modules are laminated and connected to each other.

[Lithium Ion Battery Module]

In the lithium ion battery module according to the other embodiment, a power storage element in which a plurality of the lithium ion cells 100 are laminated in series is housed in a battery outer container, the battery outer container has a frame body that is hard and is thicker than a thickness of the power storage element in a lamination direction, a positive electrode terminal provided on an upper surface of the frame body, a negative electrode terminal provided on a bottom surface of the frame body, and an exterior material that covers an opening portion surrounded by the frame body, the power storage element is housed in the opening portion surrounded by the frame body so that the positive electrode current collector on the outermost layer is arranged on an upper surface side of the battery outer container, and the negative electrode current collector on the outermost layer is arranged on a bottom surface side of the battery outer container and the opening portion is covered with the exterior material, a first current collector member is arranged between the positive electrode current collector on the outermost layer of the power storage element and the exterior material of the battery outer container, a second current collector member is arranged between the negative electrode current collector on the outermost layer of the power storage element and the exterior material of the battery outer container, the positive electrode terminal and the positive electrode current collector on the outermost layer of the power storage element are electrically connected via the first current collector member, and the negative electrode terminal and the negative electrode current collector on the outermost layer of the power storage element are electrically connected via the second current collector member.

As the lithium ion cell constituting the lithium ion battery module and each member constituting the lithium ion cell, the lithium ion cell and each member constituting the lithium ion cell described in the item of the lithium ion battery module of the present invention can be suitably used.

The positive electrode current collector and/or the negative electrode current collector constituting the lithium ion cell is preferably a resin current collector.

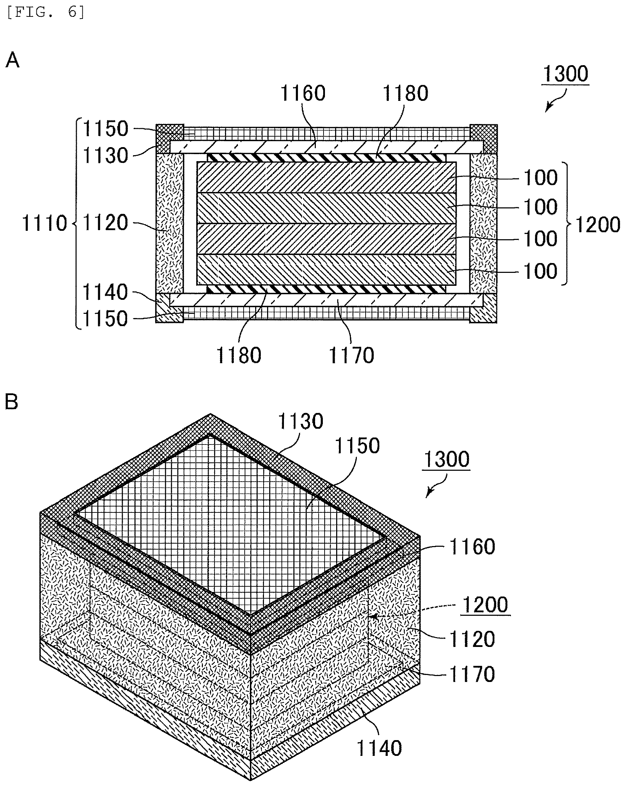

FIG. 6A is a cross-sectional view schematically showing an example of a preferable aspect of a lithium ion battery module according to another embodiment, and FIG. 6B is a perspective view schematically showing the example of the preferable aspect of the lithium ion battery module according to the other embodiment.

In a lithium ion battery module 1300 shown in FIGS. 6A and 6B, a power storage element 1200 in which a plurality of lithium ion cells 100 are laminated in series is housed in a battery outer container 1110.

The battery outer container 1110 has a frame body 1120 that is hard and is thicker than the thickness of the power storage element 1200 in a lamination direction, a positive electrode terminal 1130 provided on the upper surface of the frame body 1120, a negative electrode terminal 1140 provided on the bottom surface of the frame body 1120, and an exterior material 1150 that covers an opening portion surrounded by the frame body 1120.

The power storage element 1200 is housed in the opening portion surrounded by the frame body 1120 so that so that the positive electrode current collector on the outermost layer is arranged on the upper surface side of the battery outer container 1110, and the negative electrode current collector on the outermost layer is arranged on the bottom surface side of the battery outer container, and the opening portion is covered with the exterior material 1150.

A first current collector member 1160 is arranged between the positive electrode current collector on the outermost layer of the power storage element 1200 and the exterior material 1150, and a second current collector member 1170 is arranged between the negative electrode current collector on the outermost layer of the power storage element 1200 and the exterior material 1150. The positive electrode terminal 1130 and the positive electrode current collector on the outermost layer of the power storage element 1200 are electrically connected via the first current collector member 1160, and the negative electrode terminal 1140 and the negative electrode current collector on the outermost layer of the power storage element 1200 are electrically connected via the second current collector member 1170.

In the lithium ion battery module 1300, a conductive elastic member 1180 is provided between the positive electrode current collector on the outermost layer of the power storage element 1200 and the first current collector member 1160 and/or between the negative electrode current collector on the outermost layer of the power storage element 1200 and the second current collector member 1170.

Hereinafter, such a lithium ion battery module will be described.

(Power Storage Element)

The lithium ion battery module 1300 has the power storage element 1200 in which a plurality of the lithium ion cells 100 are laminated in series.

The power storage element 1200 includes the lithium ion cell 100.

The power storage element 1200 may have a configuration including one lithium ion cell 100, or may have a configuration in which a plurality of lithium ion cells 100 are laminated in series.

From the viewpoint of improving the output of the lithium ion battery module, the power storage element 1200 preferably has a configuration in which a plurality of lithium ion cells 100 are laminated in series. For example, five or more lithium ion cells 100 are laminated in series is preferable, and a configuration in which seven or more lithium ion cells are laminated in series is more preferable.

In the case where the power storage element 1200 has a configuration in which a plurality of lithium ion cells 100 are laminated in series, it is preferable that the lithium ion cells are laminated such that contact the positive electrode of one adjacent lithium ion cell 100 and the negative electrode of the other lithium ion cell 100 come into contact with each other, that is, each lithium ion cell 100 is directed in the same direction.

In the case where the power storage element 1200 is formed by laminating a plurality of lithium ion cells 100 to be directed in the same direction, it is preferable that when any of the lithium ion cells 100 included in the power storage element 1200 is defective, a normal power storage element 1200 can be obtained by simply replacing only the defective lithium ion cell 100 without performing work for reconnecting the terminal or the like.

(Battery Outer Container)

The battery outer container 1110 has the frame body 1120 that is hard and is thicker than the thickness of the power storage element 1200 in a lamination direction, the positive electrode terminal 1130 provided on the upper surface of the frame body 1120, the negative electrode terminal 1140 provided on the bottom surface of the frame body 1120, and the exterior material 1150 that covers an opening portion surrounded by the frame body 1120.

<Frame Body>

The frame body 1120 is thicker than the thickness of the power storage element 1200 in the lamination direction and is formed of a hard material.

Since the frame body 1120 has such a property, even when a recess (a recess in a part of the exterior material 1150) is generated in a part of the upper surface and the bottom surface of the lithium ion battery module 1300 due to reduced pressure when manufacturing the lithium ion battery module, the frame body 1120 is not deformed, and the upper surface of the frame body provided with the positive electrode terminal 1130 and the bottom surface of the frame body provided with the negative electrode terminal 1140 are kept smooth. Thus, in the case where the lithium ion battery modules 1300 are laminated, the positive electrode terminal 1130 and the negative electrode terminal 1140 on the frame body 1120 can be connected by surface contact without a gap, and contact failure does not occur.

From the viewpoint of preventing a short circuit between the positive electrode terminal 1130 and the negative electrode terminal 1140, the frame body 1120 is preferably an insulating material having low moisture permeability or a material having no moisture permeability.

As such materials, for example, glass, ceramics such as alumina-based materials, silica-based materials, ceria-based materials, and zirconia-based materials, and resins having low moisture permeability (epoxy resins and the like) can be used. The frame body 1120 may be formed of one material or a plurality of materials, and in the case where the frame body is formed of a plurality of materials, the frame body preferably has a configuration having layers formed of different materials from the inside to the outside of the frame body 1120. Even in the case where the frame body 1120 has layers formed of different materials from the inside to the outside thereof, at least one of the layers is preferably formed of a material that is insulating and has low non-moisture permeability or does not have moisture permeability. In the case where the frame body 1120 has layers formed of different materials from the inside to the outside, a layer formed of an insulating material and a layer formed of a material having low moisture permeability or no moisture permeability may be separately provided, and the innermost layer is more preferably formed of an insulating material.

The frame body 1120 is thicker than the thickness of the power storage element 1200 in the lamination direction.

The thickness of the frame body 1120 is preferably equal to or larger than the thickness of the power storage element 1200 in the lamination direction, and is preferably thicker than the thickness of the power storage element 1200 in the lamination direction by 0.1 to 1 mm.

The thickness of the frame body 1120 means the length from the bottom surface to the upper surface of the frame body 1120.

The size of the opening portion surrounded by the frame body 1120 is not particularly limited as long as the power storage element 1200 can be housed, and can be appropriately selected depending on the power storage element 1200 to be housed.

The thickness of a wall surface of the frame body 1120 is not particularly limited as long as the thickness can impart sufficient hardness, and for example, the thickness is preferably 3 to 10 mm, and more preferably 3 to 5 mm.

The shape of the frame body 1120 is not particularly limited, and examples thereof include polygons such as a triangle, quadrangle, and pentagon, circle, ellipse, and the like, but a quadrangle is preferable.

A method of forming the frame body 1120 is not particularly limited as long as the bottom surface and the lower surface of the frame body 1120 can be formed in a smooth state, and examples thereof include a method of punching the material constituting the frame body 1120, and a method of molding the material constituting the frame body 1120 into a rectangular parallelepiped shape and joining the molded materials to form a frame shape.

<Exterior Material>

The exterior material 1150 is a member that covers the opening portion surrounded by the frame body.

By fixing the exterior material 1150 on the upper surface of the frame body 1120, the power storage element 1200 is enclosed inside the opening portion surrounded by the frame body 1120.

Examples of the exterior material 1150 include a composite material of a metal sheet and a polymer sheet, a polymer metal composite film used for a laminated container, and a metal sheet used for a metal battery can.

Preferable polymer metal composite films include those having a resin layer a, a metal layer b, and a resin layer c in this order from the inside.

The resin layer a may be a heat-fusible resin film laminated on the metal layer b or a heat-fusible resin applied onto the metal layer b, and of these, a heat-fusible resin film is preferable.

As the heat-fusible resin film, for example, a film made of a heat-fusible resin such as polyethylene (PE), polypropylene (PP), modified polyethylene, modified polypropylene, ionomer, or ethylene vinyl acetate (EVA) can be used.

The heat-fusible resin film also acts as a sealing layer when the power storage element 1200 is housed inside. The heat-fusible resin film also has a role as an insulating layer.

The thickness of the resin layer a is not particularly limited, and is, for example, 10 $\mu$m to 1000 $\mu$m.

As the metal layer b, for example, a metal foil, a metal sheet, or the like can be used, and as the metal, aluminum, nickel, stainless steel, copper, or the like can be used.

The thickness of the metal layer b is not particularly limited, and is, for example, 10 $\mu$m to 300 $\mu$m.

As the resin layer c, a polyester film such as polyethylene terephthalate (PET), the heat-fusible resin film exemplified by the resin layer a, and a resin sheet such as a polyamide-based synthetic fiber such as polyamide (Nylon (registered trademark)) can be used.

The thickness of the resin layer c is not particularly limited, and is, for example, 10 $\mu$m to 1000 $\mu$m.

Examples of a specific configuration of the exterior material 1150 include a configuration in which polyethylene (PE), an aluminum foil, and polyethylene terephthalate (PET) are laminated in this order from the inside; a configuration in which polyethylene (PE), an aluminum foil, and Nylon (registered trademark) are laminated; a configuration in which an ionomer, a nickel foil, and polyethylene terephthalate (PET) are laminated; a configuration in which ethylene vinyl acetate (EVA), an aluminum foil, and polyethylene terephthalate (PET) laminated; and a configuration in which an ionomer, an aluminum foil, and polyethylene terephthalate (PET) are laminated.

<Terminal>

In the lithium ion battery module 1300, the positive electrode terminal 1130 is provided on the upper surface of the frame body 1120, and the negative electrode terminal 1140 is provided on the bottom surface of the frame body 1120.

The thickness and width of the positive electrode terminal 1130 and the negative electrode terminal 1140 are not particularly limited as long as the terminals are provided to be exposed to the outside of the lithium ion battery module 1300, respectively.

As the thickness and width of the positive electrode terminal 1130, for example, the thickness may be 100 to 500 $\mu$m and the width may be 1 to 3 mm.

In addition, as the thickness and width of the negative electrode terminal 1140, for example, the thickness may be 100 to 500 $\mu$m and the width may be 1 to 3 mm.

Examples of the positive electrode terminal 1130 and the negative electrode terminal 1140 include those in which a material having electrical conductivity is arranged on the upper surface and the bottom surface of the frame body 1120, respectively.

As the materials having electrical conductivity, metals having have low electric resistance such as metals, such as nickel, titanium, aluminum, silver, copper, platinum, iron, chromium, tin, zinc, indium, antimony, and potassium, or alloys containing these metals can be preferably used.

A method of arranging the positive electrode terminal 1130 and the negative electrode terminal 1140 is not particularly limited as long as the positive electrode terminal and the negative electrode terminal are arranged to come into contact with a current collector member described later on the frame surface of the frame body 1120.

Examples of the method of arranging the positive electrode terminal 1130 and the negative electrode terminal 1140 on the frame surface of the frame 1120 include a method in which the above-mentioned material having conductivity is formed into a sheet and arranged from above the exterior material 1150 while being in contact with the current collector member inserted under the exterior material 1150, and a method in which these electrically conductive materials are arranged on the frame body 1120 by a method such as vapor deposition from the exterior material 1150 which is arranged so as to be overlapped with the current collector member. In addition, a known lead wire can be used by arranging the terminals on the frame body 1120.

Further, in the case where the current collector member and the exterior material 1150 are fixed on the frame surface of the frame body 1120 by using a commercially available conductive metal tape having a conductive adhesive layer (for example, a conductive aluminum foil tape or the like), the conductive metal tape attached to the frame surface can also be used as a terminal.

(Current Collector Member)

In the lithium ion battery module 1300, the first current collector member 1160 is arranged between the positive electrode current collector on the outermost layer of the power storage element 1200 and the exterior material 1150 of the battery outer container 1110, and the second current collector member 1170 is arranged between the negative electrode current collector on the outermost layer of the power storage element 1200 and the exterior material 1150 of the battery outer container 1110.

In the lithium ion battery module 1300, the positive electrode terminal 1130 and the positive electrode current collector on the outermost layer of the power storage element 1200 are electrically connected via the first current collector member 1160, and the negative electrode terminal 1140 and the negative electrode current collector on the outermost layer of the power storage element 1200 are electrically connected via the second current collector member 1170.

As the first current collector member 1160 and the second current collector member 1170, a sheet-shaped member formed of a material having a low electric resistance value can be used. For example, a metal, a conductive carbon material, or the like can be suitably used as a material having a low electric resistance value.

In the case where the positive electrode current collector and the negative electrode current collector on the outermost layers of the power storage element 1200 are resin current collectors, the resin current collector has low electric resistance in the thickness direction, and has high electric resistance value in the plane direction as compared with the thickness direction. Therefore, it may be difficult to efficiently and electrically connect the resin current collector and the terminals (positive electrode terminal 1130 and negative electrode terminal 1140) only by connecting the resin current collector and the terminals.

In the case where the resin current collectors are as the positive electrode current collector and the negative electrode current collector, by using a material having a low electric resistance value in the plane direction, such as a sheet formed of a metal or a conductive carbon material, as a current collector member, the positive electrode current collector or the negative electrode current collector on the outermost layer of the power storage element 1200 and the terminals (positive electrode terminal 1130, negative electrode terminal 1140) can be connected with low electric resistance.

As the metal constituting the first current collector member 1160 and the second current collector member 1170, metals such as nickel, titanium, aluminum, silver, copper, platinum, iron, chromium, tin, zinc, indium, antimony, and potassium, or alloys containing these metals can be used.

Examples of the conductive carbon material constituting the first current collector member 1160 and the second current collector member 1170 include amorphous carbon particles (carbon black, acetylene black, ketjen black, and lignin black), carbon nanotubes, carbon fibers, graphite, and graphene.

Further, a woven or non-woven fabric (carbon cloth) using carbon fibers, or a conductive carbon sheet such as a sheet-shaped graphite (also referred to as a graphite sheet) can be used.

In particular, in the case where a carbon cloth or the like is used for the first current collector member 1160 and the second current collector member 1170, the carbon cloth is burnt and cut when a large current flows due to a short circuit or the like, and thus can function as a safety device.

The form of the first current collector member 1160 and the second current collector member 1170 is not particularly limited as long as the current collector member can be arranged on the positive electrode current collector or the negative electrode current collector on the outermost layer of the power storage element 1200, and a sheet shape, a mesh shape, a porous body, and the like may be adopted.

In the case where the polymer metal composite film is used as the exterior material 1150, the metal layer b can be used as the first current collector member 1160 or the second current collector member 1170 by peeling off the resin layer c of the exterior material 1150 to expose the metal layer b.

As a method of peeling off the resin layer c to expose the metal layer b, for example, a method in which the resin layer c is peeled off by a high temperature treatment using an organic solvent such as toluene, perchloroethylene, trichlorethylene, or carbon tetrachloride, and the metal layer b is exposed, and the like can be used.

The thickness of the first current collector member 1160 and the second current collector member 1170 is not particularly limited and may be any thickness as long as the positive electrode current collector or the negative electrode current collector on the outermost layer of the power storage element 1200 and the terminals (positive electrode terminal 1130 and negative electrode terminal 1140) can be electrically connected.

(Elastic Member)

The lithium ion battery module 1300 preferably has the conductive elastic member 1180 between the positive electrode current collector on the outermost layer of the power storage element 1200 and the first current collector member 1160 and/or between the negative electrode current collector on the outermost layer of the power storage element 1200 and the second current collector member 1170.

Since the lithium ion battery module 1300 has the elastic member 1180, contact failure occurring between the positive electrode current collector and the first current collector member 1160 and between the negative electrode current collector and the second current collector member 1170 can be more suitably prevented.

The elastic member 1180 is not particularly limited as long as the elastic member is an elastic body that is provided between the positive electrode current collector on the outermost layer of the power storage element 1200 and the first current collector member 1160 and/or between the negative electrode current collector on the outermost layer of the power storage element 1200 and the second current collector member 1170, and has flexibility to be deformed by the stress applied to the power storage element 1200. For example, an elastic body formed of a metal or metal fibers can be suitably used.

As the metal constituting the elastic member 1180, metals such as nickel, titanium, aluminum, copper, platinum, iron, chromium, tin, zinc, indium, antimony, and potassium, or alloys containing these metals can be used.

By using these metals as the elastic member 1180, high electrical conductivity can be obtained.

As the elastic member 1180, for example, an elastic body in which a conductive carbon material is supported on woven or non-woven fabrics of plant fibers and/or non-metal fibers (such as glass fibers, and carbon fibers) by mixing or coating can be used.

As the conductive carbon material, at least one or more can be selected from amorphous carbon particles (such as carbon black, acetylene black, ketjen black, and lignin black), carbon nanotubes, carbon fibers, graphite, and graphene.

Further, a woven or non-woven fabric (carbon cloth) formed of carbon fibers, or a conductive carbon sheet such as a sheet-shaped graphite (also referred to as a graphite sheet) can be used.

Among these, the conductive elastic member is preferably a carbon cloth or a graphite sheet from the viewpoint of being able to suitably absorb the distortion of the power storage element 1200 and having high electrical conductivity.

As the elastic member 1180, an elastic body obtained by mixing the above-described conductive carbon material or metal with a polymer material having elasticity, and an elastic body obtained by applying the above-described conductive carbon material or metal to the surface of a polymer material having elasticity can be used.

As the polymer material having elasticity, silicone rubber, fluorine rubber, epichlorohydrin rubber, acrylic rubber, ethylene acrylic rubber, urethane rubber, nitrile rubber, hydrogenated nitrile rubber, chlorosulfonated polyethylene, chloroprene rubber, ethylene-propene-dene rubber (EPDM), ethylene rubber, propylene rubber, butyl rubber, butadiene rubber, styrene-butadiene rubber, natural rubber, polyisobutylene, chlorinated polyethylene, isoprene rubber, expanded polypropylene, expanded polyethylene, and expanded polyurethane can be used.

The ratio of the area of the elastic member 1180 to the area of the positive electrode current collector on the outermost layer of the power storage element 1200 or the negative electrode current collector on the outermost layer of the power storage element 1200 is preferably 70% or more.

When the elastic member 1180 has such an area ratio, contact failure due to distortion of the power storage element 1200 and unevenness of the thickness of the electrodes can be suitably prevented. Further, the surface of the lithium ion battery module 1300 that functions as a positive electrode and the surface that functions as a negative electrode can be smoothed.

The ratio of the area of the elastic member 1180 is more preferably 80% or more, even more preferably 85% or more, and particularly preferably 90% or more.

The thickness of the elastic member 1180 is not particularly limited, and may be any thickness as long as the elastic member is in contact with both the first current collector member 1160 or the second current collector member 1170 and the positive electrode current collector or the negative electrode current collector of the outermost layer of the power storage element 1200. The thickness is, for example, 50 $\mu$m to 500 $\mu$m.

The elastic modulus of the elastic member 1180 is preferably, for example, 0.01 to 50 MPa/mm at 25°C.

For example, in the case where the elastic modulus of the elastic member 1180 is smaller than 0.01 MPa/mm, the elastic member 1180 may be deformed, and in the case where the elastic modulus is more than 50 MPa/mm, the followability to the contact surface with the power storage element 1200 may decrease.

The elastic modulus of the elastic member 1180 can be obtained by a conventionally known elastic modulus measuring method. For example, using a load tester (a test device having an accuracy of the first grade or higher of the force measurement system specified in 4. (Classification of tester) of JIS K 6272 is used, for example, a tensile compression tester SDWS manufactured by Imada Seisakusho Co., Ltd.), the elastic modulus can be obtained by a method of calculating an elastic modulus from the displacement amount when a predetermined load is applied to the elastic member 1180. In the case where the elastic member 1180 is rubber, the elastic modulus can be obtained by the method A described in JIS K 6254: 2010. Further, the allowable strain of the elastic member 1180 is preferably, for example, 30% to 99%.

(Method of Manufacturing Lithium Ion Battery Module)

A method of manufacturing the lithium ion battery module 1300 is not particularly limited as long as the power storage element 1200 can be housed in the battery outer container 1110. For example, the frame body 1120 is prepared, and the power storage element 1200 is housed in the opening portion surrounded by the frame body 1120 so that the positive electrode current collector on the outermost layer is arranged on the upper surface side, and the negative electrode current collector on the outermost layer is arranged on the bottom surface side. Next, the first current collector member 1160 is arranged on the upper surface side of the power storage element 1200 via the elastic member 1180 to be used as necessary, and the second current collector member 1170 is arranged on the bottom surface side of the power storage element 1200 via the elastic member 1180 to be used as necessary. Thereafter, the lithium ion battery module 1300 can be manufactured by arranging the exterior material 1150 in the opening portion of the frame body 1120, and arranging a conductive metal tape on the upper surface of the frame body 1120 as the positive electrode terminal 1130 and arranging a conductive metal tape on the bottom surface of the frame body 1120 as the negative electrode terminal 1140 to perform sealing.

Incidentally, a step of enclosing the power storage element 1200 in the frame body 1120 is preferably performed in a negative pressure environment. When sealing is performed in a negative pressure environment, the exterior material 1150 is pushed toward the inside of the frame body 1120 by atmospheric pressure when the lithium ion battery module 1300 is put out under normal pressure, and the adhesion between the power storage element 1200 and the current collector member (the first current collector member 1160 and the second current collector member 1170) is increased, which is preferable.

[Battery Pack]

A battery pack means a battery system in which a plurality of battery modules are connected in series or in parallel for the purpose of adjusting the capacity and voltage as a power supply according to the application, and the like, and in addition to the battery module, a charge or discharge control circuit or the like may be combined.

(First Aspect of Battery Pack)

A first aspect of the battery pack of another embodiment includes a plurality of the lithium ion battery modules, and has a configuration in which the positive electrode terminal provided on the upper surface of the frame body of the lithium ion battery module overlaps the negative electrode terminal provided on the bottom surface of the frame body of the lithium ion battery module, and the positive electrodes and the negative electrodes of the lithium ion battery modules are connected in series.

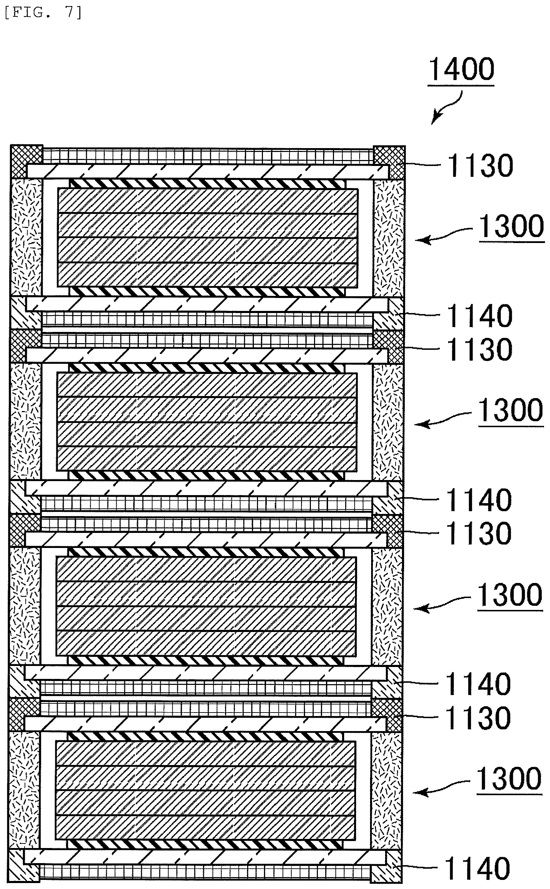

FIG. 7 is a cross-sectional view schematically showing an example of the first aspect of the battery pack according to another embodiment.

A battery pack 1400 shown in FIG. 7 includes a plurality of lithium ion battery modules 1300, and the positive electrode terminal 1130 provided on the upper surface of the frame body of the lithium ion battery module 1300 overlaps the negative electrode terminal 1140 provided on the bottom surface of the frame body of the lithium ion battery module 1300 to connect the positive electrodes and the negative electrodes of the lithium ion battery modules 1300 in series.

In the battery pack 1400, the lithium ion battery modules 1300 are laminated such that the positive electrode terminal 1130 of one adjacent lithium ion battery module 1300 and the negative electrode terminal 1140 of the other lithium ion battery module 1300 are in contact with each other, that is, the directions of the power storage elements 1200 in each lithium ion battery module 1300 are matched.

Since the battery pack 1400 has such a configuration, the output can be increased.

Since the frame body of the lithium ion battery module 1300 is thicker than the thickness of the power storage element in the lamination direction and is formed of a hard material, even when a recess is generated in the upper surface and the bottom surface of the lithium ion battery module 1300 by the reduced pressure when manufacturing the lithium ion battery module, the upper surface of the frame body provided with the positive electrode terminal 1130 and the bottom surface of the frame body provided with the negative electrode terminal 1140 are kept smooth without deforming the frame body. Thus, even when the lithium ion battery modules 1300 are connected in series, the electrical connection is good.

From the viewpoint of improving the output of the battery pack, for example, a configuration in which five or more lithium ion battery modules 1300 are connected in series is preferable, and a configuration in which seven or more lithium ion battery modules are connected in series is more preferable.

Since the battery pack 1400 is formed by laminating the plurality of lithium ion battery modules without using a member for connecting the plurality of lithium ion battery modules 1300, even when one of the lithium ion battery modules 1300 is defective, by simply replacing the defective product without rewiring between the lithium ion battery modules 1300, the rest good products can be used as they are, which is excellent in maintainability and economical efficiency.

(Second Aspect of Battery Pack)

A second aspect of the battery pack of another embodiment includes a plurality of the above-mentioned lithium ion battery modules, and has a configuration in which the positive electrode terminals provided on the upper surfaces of the frame bodies of the lithium ion battery modules are connected to each other, the negative electrode terminals provided on the bottom surfaces of the frame bodies of the lithium ion battery modules are connected to each other, and the positive electrodes and the negative electrodes of the lithium ion battery modules are connected in parallel.

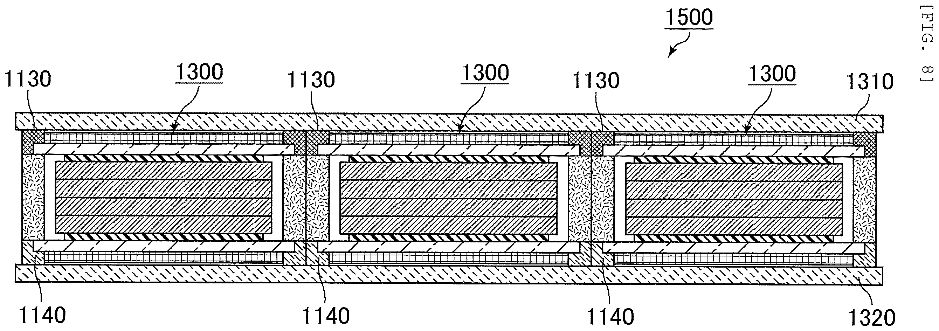

FIG. 8 is a cross-sectional view schematically showing an example of the second aspect of the battery pack according to the other embodiment.

A battery pack 1500 shown in FIG. 8 includes a plurality of lithium ion battery modules 1300, and the plurality of lithium ion battery modules are connected in parallel so that the positive electrode terminal 1130 of the lithium ion battery module 1300 is electrically connected to a positive electrode current collector plate 1310, and the negative electrode terminal 1140 is electrically connected to the negative electrode current collector plate 1320.

Since the battery pack 1500 has such a configuration, the battery pack can be used as a high capacity power supply.

From the viewpoint of improving the service life of the battery pack 1500, for example, a configuration in which five or more lithium ion battery modules 1300 are connected in parallel is preferable, and a configuration in which seven or more lithium ion battery modules are connected in parallel is more preferable.

In the battery pack 1500, even when recesses are generated in the upper surface and the bottom surface of the lithium ion battery module 1300, the upper surface of the frame body provided with the positive electrode terminal 1130 and the bottom surface of the frame body provided with the negative electrode terminal 1140 are kept smooth.

Thus, the electrical connection between the positive electrode terminal 1130 and the positive electrode current collector plate 1310 of the lithium ion battery module 1300 and the electrical connection between the negative electrode terminal 1140 and the negative electrode current collector plate 1320 are good.

The materials constituting the positive electrode current collector plate 1310 and the negative electrode current collector plate 1320 are not particularly limited, and known highly conductive materials can be used for the current collector plate for lithium ion batteries.

As the constituent material of the current collector plate, for example, metal materials such as aluminum, copper, titanium, nickel, stainless steel (SUS), and alloys thereof are preferable.

From the viewpoint of light weight, corrosion resistance, and high conductivity, aluminum and copper are more preferable, and aluminum is particularly preferable.

The same material may be used for the positive electrode current collector plate 1310 and the negative electrode current collector plate 1320, or different materials may be used.

Since the battery pack 1500 is formed by sandwiching the plurality of lithium ion battery modules 1300 between the positive electrode current collector plate 1310 and the negative electrode current collector plate 1320, even when one of the lithium ion battery modules 1300 is defective, the rest good products can be used as they are by simply replacing the defective product, which is excellent in maintainability and economical efficiency.

The second aspect of the battery pack according to the other embodiment may have a configuration in which the plurality of lithium ion battery modules 1300 are laminated while being turned upside down so that the positive electrode terminals and the negative electrode terminals are in contact with each other, and the positive electrode terminals are connected in parallel and the negative electrode terminals are connected in parallel by being connected to the output terminals, respectively.

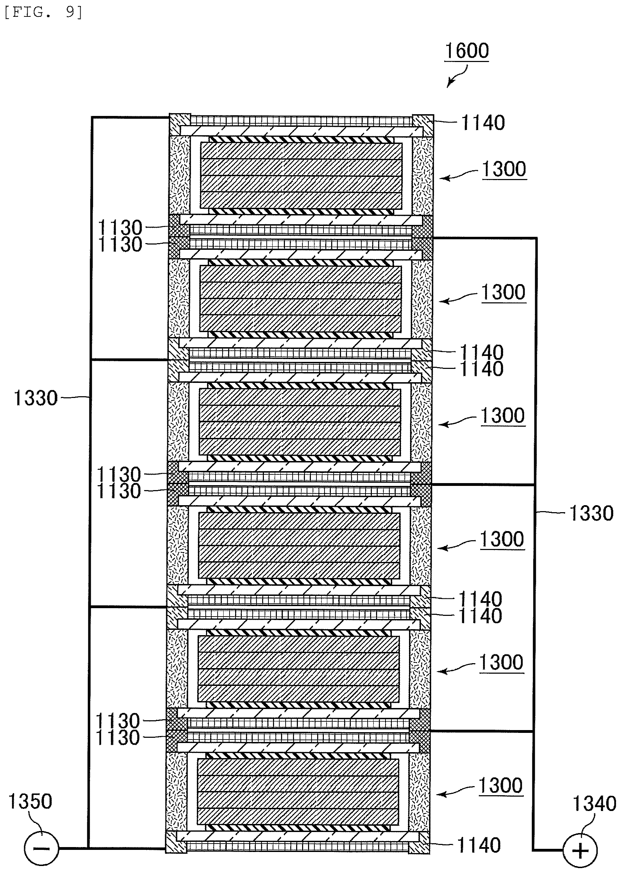

FIG. 9 is a cross-sectional view schematically showing another example of the second aspect of the battery pack according to the other embodiment.

In the battery pack 1600 shown in FIG. 9, the plurality of lithium ion battery modules 1300 are laminated while being turned upside down so that the positive electrode terminals 1130 and the negative electrode terminals 1140 are in contact with each other, and the positive electrode terminals 1130 are connected in parallel and the negative electrode terminals 1140 are connected in parallel by being connected to the output terminals 1340 and 1350 respectively, via connection means 1330.

In the battery pack 1600, charging and discharging is performed via the output terminals 1340 and 1350. Since the battery pack 1600 has such a configuration, the battery pack can be used as a high capacity power supply.

From the viewpoint of improving the service life of the battery pack 1600, for example, a configuration in which five or more lithium ion battery modules 1300 are connected in parallel is preferable, and a configuration in which seven or more lithium ion battery modules are connected in parallel is more preferable.

In the battery pack 1600, even when a recess is generated in the upper surface and the bottom surface of the lithium ion battery module 1300, the upper surface of the frame body provided with the positive electrode terminal 1130 and the bottom surface of the frame body provided with the negative electrode terminal 1140 are kept smooth, and thus the electrical connection is good.

The connection means 1330 and the output terminals 1340 and 1350 are not particularly limited, and known ones used for lithium ion batteries can be appropriately selected and used.

Since the battery pack 1600 is formed by laminating the plurality of battery modules 1300 while being turned upside down, even when one of the lithium ion battery modules 1300 is defective, the rest good products can be used as they are by simply removing the defective product, which is excellent in maintainability and economical efficiency.

Subsequently, another embodiment of the lithium ion battery module (hereinafter, also referred to as a lithium ion battery module according to another embodiment) will be described.

As a method of charging the lithium ion battery module, a charging device (Pamphlet of International Publication No. WO 2009/119075) that monitors the voltage between terminals of each cell and controls charging is known.

The charging device described in Pamphlet of International Publication No. WO 2009/119075 requires a circuit or the like for grasping the state of charge of the lithium ion battery for each cell, and the assembled battery also requires a terminal for each cell. Therefore, it is difficult to miniaturize the assembled battery and the charging device.

A lithium ion battery module according to still another embodiment is a lithium ion battery module including an assembled battery formed by connecting cells of a lithium ion battery in series, in which the cell includes a lamination unit formed of a set of a positive electrode current collector, a positive electrode active material layer, a separator, a negative electrode active material layer, and a negative electrode current collector, laminated in this order, and an electrolytic solution, the positive electrode current collector and the negative electrode current collector each include a resin current collector layer, the positive electrode active material contained in the positive electrode active material layer is formed of a positive electrode active material having an olivine type crystal structure, and the lithium ion battery module has a charging terminal for making a charging current flow to the assembled battery and an assembled battery voltage measuring terminal for detecting a voltage across the assembled battery, and does not have a cell voltage measuring terminal for detecting a voltage between the positive electrode current collector and the negative electrode current collector of each of the cells.

Further, a method of charging a lithium ion battery module relates to a method of charging a lithium ion battery module including an assembled battery formed by connecting the cells of the lithium ion battery in series, in which the cell includes a lamination unit formed of a set of a positive electrode current collector, a positive electrode active material layer, a separator, a negative electrode active material layer, and a negative electrode current collector, laminated in this order, and an electrolytic solution, the positive electrode current collector and the negative electrode current collector each include a resin current collector layer, the positive electrode active material contained in the positive electrode active material layer is formed of a positive electrode active material having an olivine type crystal structure, regarding the cell, a library in which a relationship between a ratio of an amount of change in voltage to an amount of change in battery capacity (voltage change amount/battery capacity change amount, called slope X) in a region of a SOC of 49% to 51% on a SOC-CCV curve of the cell obtained from a relationship between a battery capacity and a voltage at the time of charging when charging the cell for each of different charging conditions, and a ratio of an amount of change in voltage to an amount of change in battery capacity (called slope Y) at a point where a voltage suddenly rises in a region of a SOC of 99% to 100% on the SOC-CCV curve of the cell is recorded is prepared, when charging the lithium ion battery including the assembled battery formed by connecting the cells in series, values of slope $X_0$ and slope $Y_0$, which are values of the slope X and the slope Y, corresponding to charging conditions used in the charging are referred to from the library, in a region in which a voltage across the assembled battery during charging is 3.3 x N (V) or higher (N represents the number of laminated cells), a ratio of an amount of change in voltage to an amount of change in battery capacity (slope Z) at the time of charging is continuously measured, and when relational expression (1) of the slope Z, the number of laminated cells N, the slope $X_0$, and the slope $Y_0$ is satisfied, the charging of the assembled battery is stopped.

$$Z \geq X_0(N-1) + Y_0 \quad . . . \quad \text{Expression (1)}$$

When the lithium ion battery module and the method of charging the lithium ion battery module are used, the lithium ion battery module can be charged so that there is no overcharged cell without the need for a circuit or the like for monitoring the state of charge of each cell.

Therefore, the lithium ion battery and the charging device can be minimized, which is useful.

Hereinafter, the lithium ion battery module of the other embodiment and the charging method of the lithium ion battery module will be described in detail.

A lithium ion battery module according to still another embodiment is a lithium ion battery module including an assembled battery formed by connecting cells of a lithium ion battery in series, in which the cell includes a lamination unit formed of a set of a positive electrode current collector, a positive electrode active material layer, a separator, a negative electrode active material layer, and a negative electrode current collector, laminated in this order, and an electrolytic solution, the positive electrode current collector and the negative electrode current collector each include a resin current collector layer, the positive electrode active material contained in the positive electrode active material layer is formed of a positive electrode active material having an olivine type crystal structure, and the lithium ion battery module has an assembled battery voltage measuring terminal for detecting a voltage between the positive electrode current collector and the negative electrode current collector positioned at both ends of the assembled battery, and does not have a cell voltage measuring terminal for detecting a voltage between the positive electrode current collector and the negative electrode current collector of each of the cells.

First, an example of the lithium ion battery module will be described.

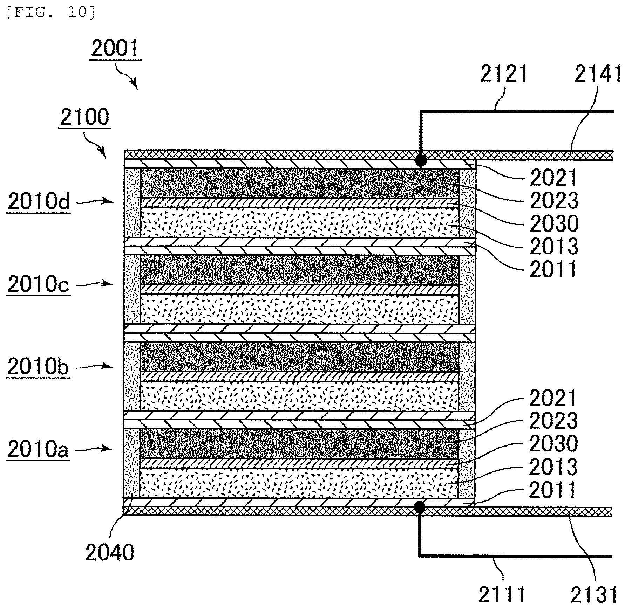

FIG. 10 is a cross-sectional view schematically showing an example of a lithium ion battery module according to still another embodiment.

A lithium ion battery module 2001 shown in FIG. 10 includes an assembled battery 2100 in which four cells 2010a, 2010b, 2010c, and 2010d are connected in series.

Charging terminals for making a charging current flow to the assembled battery are connected above and below the assembled battery 2100.

It is preferable that the lithium ion battery module 2001 is provided with a control device or the like for performing charging management of the assembled battery 2100, but the control device is not shown in the drawing.

Since the assembled battery 2100 includes four cells, the number of laminated cells N is 4.

The number of laminated cells N in the assembled battery is not limited, and is preferably 2 to 24.

The structure of the cell may be any structure as long as the cell includes a lamination unit formed of a set of a positive electrode current collector, a positive electrode active material layer, a separator, a negative electrode active material layer, and a negative electrode current collector, laminated in this order, and an electrolytic solution. However, it is preferable that the cell has a structure in which the electrolytic solution is enclosed in a positive electrode active material layer and a negative electrode active material layer by a sealing material that is arranged between the positive electrode current collector and the negative electrode current collector and seals the outer periphery of the separator.

Further, a method of connecting the cells is not limited as long as the positive electrode current collector and the negative electrode current collector are electrically connected in series via a conductive connecting member used as necessary, but it is preferable that the positive electrode current collector of the cell and the negative electrode current collector of another cell are directly laminated and connected in series.

Since the lithium ion battery module does not have the cell voltage measuring terminal for detecting the voltage between the positive electrode current collector and the negative electrode current collector for each cell, in the case where the positive electrode current collector of the cell and the negative electrode current collector of another cell are directly laminated and connected in series to form an assembled battery, and in the case where any cell included in the assembled battery is defective, a normal lithium ion battery module can be obtained by simply replacing only the defective cell without performing work for reconnecting the terminal or the like, which is preferable.

The configuration of the cell will be described by taking the cell 2010a shown at the bottom as an example.

The cell includes a lamination unit including a set of a positive electrode current collector 2011, a positive electrode active material layer 2013, a separator 2030, a negative electrode active material layer 2023, and a negative electrode current collector 2021 laminated in this order, and an electrolytic solution.

The electrolytic solution is contained in the positive electrode active material layer 2013 and the negative electrode active material layer 2023, and is not particularly shown.

In the cell shown in FIG. 10, the outer periphery of the positive electrode active material layer 2013 and the negative electrode active material layer 2023 containing the electrolytic solution is sealed with a sealing material 2040.

The sealing material 2040 is arranged between the positive electrode current collector 2011 and the negative electrode current collector 2021 and has a function of sealing the outer periphery of the separator 2030.

The lamination unit include a set of a positive electrode current collector, a positive electrode active material layer, a separator, a negative electrode active material layer, and a negative electrode current collector laminated in this order as described above.

Assembled battery voltage measuring terminals 2111 and 2121 are connected to the positive electrode current collector 2011 and the negative electrode current collector 2021 positioned at both ends of the assembled battery, respectively.

By measuring the voltage between the assembled battery voltage measuring terminal 2111 and the assembled battery voltage measuring terminal 2121, the voltage of the entire assembled battery can be measured.

The lithium ion battery module does not have a cell voltage measuring terminal for detecting the voltage between the positive electrode current collector and the negative electrode current collector of the cell. Therefore, the number of voltage measuring terminals of the assembled battery as a whole is small, and the lithium ion battery can be miniaturized.

Under the assembled battery 2100, the charging terminal 2131 is connected to the outside of the positive electrode current collector 2011 to which the assembled battery voltage measuring terminal 2111 is connected. Further, above the assembled battery 2100, a charging terminal 2141 is connected to the outside of the negative electrode current collector 2021 to which the assembled battery voltage measuring terminal 2121 is connected. The assembled battery 2100 can be charged by making a current flow from a power supply between the charging terminal 2131 and the charging terminal 2141.

Further, by installing an ammeter between the charging terminal 2131 and the charging terminal 2141, the current value during charging of the assembled battery can be measured.

Each portion constituting the lithium ion battery module will be described below.

The positive electrode current collector and the negative electrode current collector each include a resin current collector layer.

The resin current collector constituting the resin current collector layer preferably contains a conductive filler and a resin (also referred to as a matrix resin) constituting the base of the resin current collector.

Examples of the matrix resin include polyethylene (PE), polypropylene (PP), polymethylpentene (PMP), polycycloolefin (PCO), polyethylene terephthalate (PET), polyether nitrile (PEN), polytetrafluoroethylene (PTFE), styrene-butadiene rubber (SBR), polyacrylonitrile (PAN), polymethyl acrylate (PMA), polymethyl methacrylate (PMMA), polyvinylidene fluoride (PVdF), epoxy resin, silicone resin, and mixtures thereof.

From the viewpoint of electrical stability, polyethylene (PE), polypropylene (PP), polymethylpentene (PMP), and polycycloolefin (PCO) are preferable, and polyethylene (PE), polypropylene (PP), and polymethylpentene (PMP) are more preferable.

As the positive electrode current collector and the negative electrode current collector included in each cell constituting the assembled battery, a metal current collector can also be used as a part thereof.

However, it is preferable that all of the positive electrode current collector and the negative electrode current collector included in each cell constituting the assembled battery are resin current collectors.

The conductive filler is selected from materials having conductivity.

Specific examples of the materials include metals [such as nickel, aluminum, stainless steel (SUS), silver, copper, and titanium], carbon [such as graphite and carbon black (such as acetylene black, ketjen black, furnace black, channel black, and thermal lamp black)], and mixtures thereof, but the material is not limited thereto.

These conductive fillers may be used alone or in combination of two or more thereof. In addition, alloys or metal oxides of these may also be used. From the viewpoint of electrical stability, aluminum, stainless steel, carbon, silver, copper, titanium, and mixtures thereof are preferable, silver, aluminum, stainless steel, and carbon are more preferable, and carbon is even more preferable. Further, these conductive fillers may also be one obtained by applying a conductive material (a metal material among the above-described conductive filler materials) around a particle-based ceramic material or a resin material by plating or the like.

In addition to the matrix resin and the conductive filler, the resin current collector may contain other components (a dispersant, a cross-linking accelerating agent, a cross-linking agent, a coloring agent, an ultraviolet absorbent, a plasticizer, and the like).

The positive electrode active material layer contains a positive electrode active material, and the positive electrode active material is formed of a positive electrode active material having an olivine type crystal structure.

Examples of the positive electrode active material having an olivine type crystal structure include a compound represented by chemical formula $LiXPO_4$ (X represent a metal). For example, lithium nickel phosphate ($LiNiPO_4$), lithium iron phosphate ($LiFePO_4$) and the like can be exemplified, and lithium iron phosphate is preferable.

Since the battery using a positive electrode active material with an olivine type crystal structure has the characteristic that the voltage rises sharply at the end of charging, the battery is suitable for monitoring the state of charge by using the method of charging the lithium ion battery module described later and performing charging to prevent overcharging.

The positive electrode active material having an olivine type crystal structure can be manufactured by a known method described in Japanese Laid-open Patent Publication No. 2012-12262, Pamphlet of International Publication No. WO 2016-063932, or the like and can also be obtained from the market.

The positive electrode active material may be a coated positive electrode active material having at least a part of its surface coated with a coating material containing a polymer compound.

When the periphery of the positive electrode active material is coated with the coating material, the change in volume of the positive electrode is mitigated, thereby making it possible to suppress the expansion of the positive electrode.

As the polymer compound constituting the coating material, a compound described as a resin for coating the non-aqueous secondary battery active material in Japanese Laid-open Patent Publication No. 2017-054703 can be preferably used.

The coating material may contain a conductive agent.

As the conductive agent, the same conductive filler as that contained in the resin current collector can be preferably used.

The positive electrode active material layer may contain an adhesive resin.

As the adhesive resin, for example, there can be suitably used one prepared by mixing a small amount of an organic solvent with the resin for coating non-aqueous secondary battery active materials, described in Japanese Laid-open Patent Publication No. 2017-054703 and adjusting the glass transition temperature of the mixture to room temperature or lower, one described as an adhesive in Japanese Laid-open Patent Publication No. H10-255805, and the like.

The adhesive resin means a resin having adhesiveness (properties that allow adhesion by applying slight pressure without the use of water, solvent, heat, or the like) in a state in which a solvent component is not contained.

Further, it is preferable that the positive electrode active material layer does not contain a solution drying type binder for electrodes.

The solution drying type binder for electrodes (such as a PVDF-based binder, a SBR-based binder, or a CMC-based binder) is used by dissolving or dispersing a polymer compound in a solvent, and is dried and solidified by volatilizing a solvent component so that the active materials and the active material and the current collector are firmly bonded and fixed, and the binder for electrodes from which the solvent component is volatilized does not have adhesiveness.

Therefore, the solution drying type binder for electrodes and the adhesive resin are different materials.

As the separator, known separators used for lithium ion batteries such as a lamination type separator using a laminated film including a porous resin film formed of polyethylene or polypropylene, a porous polyethylene film, and a porous polypropylene, or the like, and a non-woven fabric formed of synthetic fibers (such as polyester fibers and aramid fibers), glass fibers, or the like, and those made by attaching ceramic fine particles such as silica, alumina, or titania to surfaces thereof may be used, and commercially available products such as Hipore manufactured by Asahi Kasei Corporation, Celgard manufactured by Asahi Kasei Corporation, and U-Pore manufactured by Ube Industries, Ltd. can be used.

The negative electrode active material layer contains a negative electrode active material.

Examples of the negative electrode active material include carbon-based materials [such as graphite, non-graphitizable carbon, amorphous carbon, and resin burned bodies (for example, burned and carbonized phenol resin, and furan resin), cokes (for example, pitch coke, needle coke, and petroleum coke), and carbon fiber], silicon-based materials [such as silicon, silicon oxide (SiOx), silicon-carbon complexes (such as complexes in which the surfaces of carbon particles are coated with silicon and/or silicon carbide, complexes in which the surfaces of silicon particles or silicon oxide particles are coated with carbon and/or silicon carbide, and silicon carbide), silicon alloys (such as a silicon-aluminum alloy, a silicon-lithium alloy, a silicon-nickel alloy, a silicon-iron alloy, a silicon-titanium alloy, a silicon-manganese alloy, a silicon-copper alloy, and a silicon-tin alloy), and the like], conductive polymers (for example, polyacetylene, and polypyrrole), metals (such as tin, aluminum, zirconium, and titanium), metal oxides (such as titanium oxide and lithium-titanium oxide), and metal alloys (for example, a lithium-tin alloy, a lithium-aluminum alloy, and a lithium-aluminum-manganese alloy), and mixtures thereof with carbon-based materials.

Among the above-described negative electrode active materials, those that do not contain lithium or lithium ions thereinside may be subjected to a pre-doping treatment in which a part or all of the negative electrode active material is pre-doped with lithium or lithium ions in advance.

Among these, from the viewpoint of battery capacity, or the like, the carbon-based materials, the silicon-based materials, and the mixtures thereof are preferable, as the carbon-based material, graphite, non-graphitizable carbon, and amorphous carbon are more preferable, and as the silicon-based material, silicon oxide and silicon-carbon complexes are even more preferable.

The negative electrode active material may also be a coated negative electrode active material in which at least a part of the surface thereof is coated with a coating material containing a polymer compound.

When the periphery of the negative electrode active material is coated with the coating material, the change in volume of the negative electrode is mitigated, thereby making it possible to suppress the expansion of the negative electrode.

As the coating material, the same coating material as that used in the coated positive electrode active material can be used, and the coating material may contain a conductive agent.

In addition, the negative electrode active material layer may also contain an adhesive resin like the positive electrode active material layer. As the adhesive resin, the same adhesive resin as that contained in the positive electrode active material layer can be used. Further, it is preferable that the negative electrode active material layer does not contain a solution drying type binder for electrodes.

The positive electrode active material layer and the negative electrode active material layer include an electrolytic solution containing an electrolyte and a non-aqueous solvent.

As the electrolyte, ones used for known electrolytic solutions, and the like can be used, and examples of the electrolyte include inorganic acid lithium salts such as $LiPF_6$, $LiBF_4$, $LiSbF_6$, $LiAsF_6$, $LiN(FSO_2)_2$, and $LiClO_4$, and organic acid lithium salts such as $LiN(CF_3SO_2)_2$, $LiN(C_2F_5SO_2)_2$, and $LiC(CF_3SO_2)_3$, and $LiN(FSO_2)_2$ (also referred to as LiFSI) is preferable.

As the non-aqueous solvent, ones used for known electrolytic solutions, and the like can be used, and for example, a lactone compound, a cyclic or chain carbonic acid ester, a chain carboxylic acid ester, a cyclic or chain ether, a phosphoric acid ester, a nitrile compound, an amide compound, a sulfone, a sulfolane, and the like and mixtures thereof can be used.

In addition, the sealing material is arranged between the positive electrode current collector and the negative electrode current collector and seals the outer periphery of the separator to enclose the electrolytic solution in the positive electrode active material layer and the negative electrode active material layer, and the material is not particularly limited, as long as the material is durable to the electrolytic solution to be enclosed. A polymer material is preferable, and a thermosetting polymer material is more preferable.

Specific examples thereof include an epoxy-based resin, a polyolefin-based resin, a polyurethane-based resin, and a polyvinylidene fluoride resin, and an epoxy-based resin is preferable due to high durability and easy handling.

The charging terminal for making the charging current flow to the assembled battery is not limited in shape and composition as long as the charging current can flow to the assembled battery, but is preferably formed of a metal foil (copper foil) laminated on each of the positive electrode current collector and the negative electrode current collector positioned at both ends of the assembled battery. In addition, in the case where the charging terminal is formed of a metal foil, it is preferable that the metal foil at least has an area the same as those of the positive electrode current collector and the negative electrode current collector. The metal foil laminated on the positive electrode current collector and the negative electrode current collector may be extended as it is to the outside of the assembled battery and connected to a charging power supply, and a lead wire from the charging power supply may be connected to the metal foil laminated on the positive electrode current collector and the negative electrode current collector.

The assembled battery voltage measuring terminal for detecting the voltage across the assembled battery is not limited in shape and composition as long as the terminal can detect the voltage across the assembled battery, and a lead wire connected to the positive electrode current collector and the negative electrode current collector positioned at both ends of the assembled battery can be used.

The lithium ion battery module may be the assembled battery itself.

That is, the assembled battery 2100 shown in FIG. 10 may be the lithium ion battery module 2001 itself.

The assembled battery here means a combination of a plurality of cells in series or in parallel in order to adjust the voltage and capacity as one power supply, and the battery module means a battery module that can be used as a power supply by combining a battery container, a charging and discharging terminal, a control device, and the like.

Further, the lithium ion battery module may be a battery module integrally provided with a mechanism such as a control device for charging and stopping charging with the assembled battery, or may be a battery module provided separately from the assembled battery.

Hereinafter, an example of the mechanism such as a control device that can be provided in the lithium ion battery module will be described.

The lithium ion battery module preferably includes a voltage measuring unit that measures the voltage (mV) during charging of the assembled battery, a current measuring unit that measures the current value (mA) of the assembled battery during charging, a slope calculation unit that calculates slope Z (voltage change amount (mV)/battery capacity change amount (mAh)), which is a ratio of an amount of change in voltage to an amount of change in battery capacity at the time of charging obtained from the voltage measured by the voltage measuring unit, the current value and the charging time measured by the current measuring unit, and a charging stop mechanism that stops charging the assembled battery when the slope Z calculated by the slope calculation unit exceeds a predetermined value.

As described above, it is preferable that the lithium ion battery module includes the voltage measuring unit, the current measuring unit, the slope calculation unit, and the charging stop mechanism.

All of these mechanisms may be integrally provided in the assembled battery, or may be separately provided from the assembled battery, and an example of the case where these mechanisms are provided separately from the assembled battery will be described below.

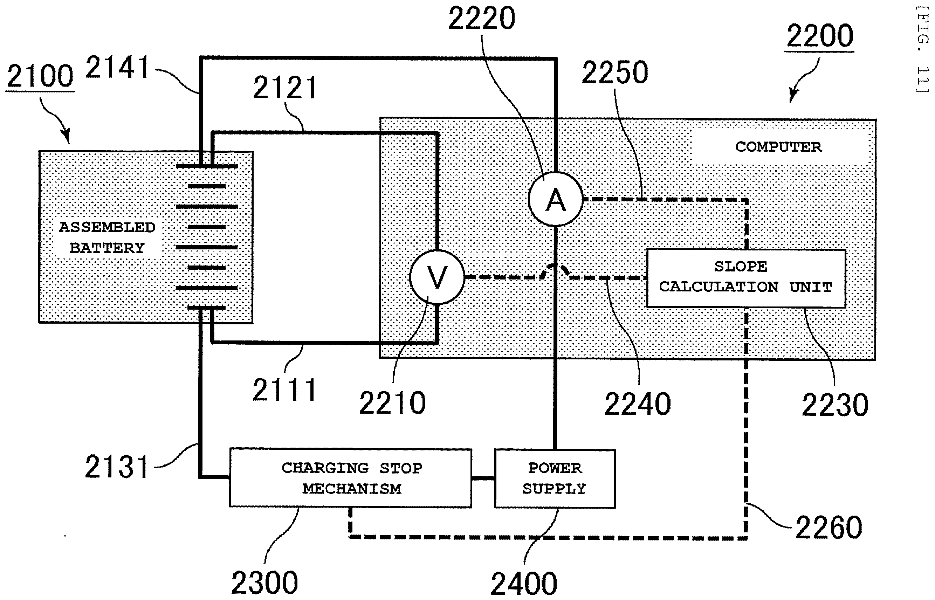

FIG. 11 is a block diagram showing an example of the overall configuration of the lithium ion battery module.

In the lithium ion battery module 2001, the assembled battery 2100 will be described with reference to FIG. 10.

From the assembled battery 2100, the assembled battery voltage measuring terminals 2111 and 2121 and the charging terminals 2131 and 2141 are drawn out of the assembled battery 2100.

The voltage measuring unit, the current measuring unit, and the slope calculation unit are collectively provided in a computer 2200.

In the computer 2200, a voltmeter 2210 that measures the voltage between the assembled battery voltage measuring terminals 2111 an 2121 drawn out from the assembled battery 2100, and an ammeter 2220 that is connected in series to a circuit including the assembled battery 2100 and the charging terminals 2131 and 2141 to measure the current value during charging of the assembled battery 2100 are provided. Further, software for recording the voltage measured by the voltmeter 2210 and the current value measured by the ammeter 2220 is stored.

The voltage measuring unit includes the voltagemeter, which is a mechanism for measuring a voltage, and the software for recording a voltage, and the current measuring unit includes the current meter, which is a mechanism for measuring a current value, and the software for recording the current value.

The voltmeter is connected in parallel with the assembled battery using the assembled battery voltage measuring terminals 2111 and 2121. The ammeter is connected in series between the assembled battery and the charging stop mechanism, and measures the current value flowing through the assembled battery through the charging stop mechanism.

The computer 2200 stores software that calculates and records the amount of change in the battery capacity of the assembled battery from the current value obtained by the current measuring unit.

The battery capacity is obtained by integrating the current values flowing through the assembled battery, and the amount of change in the battery capacity is obtained as the product of the average value of two current values (mA) having different acquisition timings and the time difference (h) at which the current values are obtained.

Further, the computer 2200 is provided with the slope calculation unit 2230. A voltage signal from the voltage measuring unit is introduced into the slope calculation unit 2230 via a signal line 2240, and a current signal from the current measuring unit is introduced into the slope calculation unit via a signal line 2250.

The slope calculation unit calculates the slope Z (voltage change amount (mV)/battery capacity change amount (mAh)), which is a ratio of the amount of change in voltage to the amount of change in battery capacity, from the amount of change in battery capacity and the charging time obtained from the current value obtained by the current measuring unit and the voltage measured by the voltage measuring unit.

Here, the slope is a value calculated from the ratio the voltage change amount (mV) to the capacity change amount (mAh) obtained by multiplying the average value of two current values (mA) having different acquisition timings and the time difference (h) at which the current values are obtained, and the voltage change amount is a difference in the voltage of the assembled battery measured at the timing when the current value is obtained.

Further, the computer 2200 determines whether or not the calculated slope exceeds a predetermined value.

The software that calculates the amount of change in battery capacity, calculates the slope Z, and determines whether or not the slope Z exceeds a predetermined value can be said to be the slope calculation unit.

It is preferable that the software stores a calculation expression required for determining whether or not the value exceeds a predetermined value, and variables used in the calculation expression.

An example of calculation of the amount of change in the battery capacity in the slope calculation unit and calculation of the slope Z will be described.

The current value measured by the current measuring unit and flowing after t seconds from the start of charging is defined as a(mA), and the current value flowing after (t + 1) seconds is defined as b(mA).

The voltage measured by the voltage measuring unit and flowing after t seconds from the start of charging is defined as c(mV), and the voltage flowing after (t + 1) seconds is defined as d(mV).

The amount of change in battery capacity after t seconds to (t + 1) seconds from the start of charging is

$$[(a + b)/2] \times (1/3600) \ (mAh).$$

The amount of change in voltage after t seconds to (t + 1) seconds from the start of charging is

$$d - c \ (mV).$$

Therefore, the slope Z from t seconds after the start of charging to (t + 1) seconds after the start of charging is expressed as

$$Z = (d - c)/\{[(a + b)/2] \times (1/3600)\},$$

and

$$Z = [(d - c) \times 7200]/(a + b)$$

Here, the case where the slope is calculated every second has been described as an example, but the measurement interval does not have to be every second.

As a method of charging the assembled battery, two kinds of methods, constant current charging and constant power charging, are known.

Constant current charging is a method of performing charging with a constant current value during charging. That is, in the above-mentioned calculation example of the slope Z, since the current value is always constant, when the current value flowing after t seconds from the start of charging is a(mA), the current value flowing after (t + 1) seconds is also a(mA), and thus the relationship of a = b is established.

Constant power charging is a method of performing charging with a constant power value during charging. Since the voltage value rises as the charging progresses, charging is performed while controlling the current value so that the current value decreases as the charging progresses.

In the calculation example of the slope Z described above, since the product of the voltage and the current value is always constant, the product of the current value a(mA) and the voltage c(mV) flowing after t seconds from the start of charging, and the product of the current value b(mA) and the voltage d(mV) flowing after (t + 1) seconds are constant. That is, the relationship of $a \times c = b \times d = W$ (constant) is established.

The charging stop mechanism 2300 is provided between a power supply 2400 for charging the assembled battery 2100 and the assembled battery. The charging stop mechanism 2300 has a role of a switch for controlling whether or not the current from the power supply 2400 flows through the assembled battery 2100, and the charging stop mechanism 2300 can switch between starting and continuing charging and stopping charging.

The charging stop mechanism 2300 is connected to the computer 2200 including the voltage measuring unit, the current measuring unit, and the slope calculation unit. A signal line 2260 is provided between the computer 2200 and the charging stop mechanism 2300. The computer 2200 sends a signal to stop charging when the slope exceeds a predetermined value to the charging stop mechanism 2300 via the signal line 2260 based on the slope value determined by the slope calculation unit.

The charging stop mechanism that has received the signal can stop charging.

The details of the determination method of stopping charging will be described in the section of the method of charging the lithium ion battery module.

Subsequently, the method of charging the lithium ion battery module will be described.

The method of charging the lithium ion battery module is a method of charging a lithium ion battery module including an assembled battery formed by connecting the cells of the lithium ion battery in series, in which the cell includes a lamination unit formed of a set of a positive electrode current collector, a positive electrode active material layer, a separator, a negative electrode active material layer, and a negative electrode current collector, laminated in this order, and an electrolytic solution, the positive electrode current collector and the negative electrode current collector each include a resin current collector layer, the positive electrode active material contained in the positive electrode active material layer is formed of a positive electrode active material having an olivine type crystal structure, regarding the cell, a library in which a relationship between a ratio of an amount of change in voltage to an amount of change in battery capacity (voltage change amount/battery capacity change amount, referred to as slope X) in a region of a SOC of 49% to 51% on a SOC-CCV curve of the cell obtained from a relationship between a battery capacity and a voltage at the time of charging when charging the cell for each of different charging conditions, and a ratio of an amount of change in voltage to an amount of change in battery capacity (referred to as slope Y) at a point where a voltage suddenly rises in a region of a SOC of 99% to 100% on the SOC-CCV curve of the cell is recorded is prepared, when charging the lithium ion battery including the assembled battery formed by connecting the cells in series, values of slope $X_0$ and slope $Y_0$, which are values of the slope X and the slope Y, corresponding to charging conditions used in the charging are referred to from the library, in a region in which a voltage across the assembled battery during charging is $3.3 \times N$ (V) or higher (N represents the number of laminated cells), a ratio of an amount of change in voltage to an amount of change in battery capacity (slope Z) at the time of charging is continuously measured, and when relational expression (1) of the slope Z, the number of laminated cells N, the slope $X_0$, and the slope $Y_0$ is satisfied, the charging of the assembled battery is stopped.

$$Z \geq X_0(N-1) + Y_0 \quad . \quad . \quad . \quad \text{Expression (1)}$$

Note that SOC is an abbreviation for state of charge and means the remaining capacity of the battery (the ratio of the remaining capacity at that time to the capacity at the time of full charge).

CCV is an abbreviation for Closed Circuit Voltage and means a closed circuit voltage, and is a voltage between both terminals of the battery measured during charging in a state in which the battery is connected to a device such as a charging stop mechanism and a current flows (a state in which a load is applied).

In this method of charging the lithium ion battery module, regarding the cell constituting the lithium ion battery module, a library is prepared in which a relationship between a ratio of an amount of change in voltage to an amount of change in battery capacity (voltage change amount/battery capacity change amount, referred to as slope X) in a region of a SOC of 49% to 51% on a SOC-CCV curve of the cell obtained from a relationship between a battery capacity and a voltage at the time of charging when charging the cell for each of different charging conditions, and a ratio of an amount of change in voltage to an amount of change in battery capacity (referred to as slope Y) at a point where a voltage suddenly rises in a region of a SOC of 99% to 100% on the SOC-CCV curve of the cell is recorded.

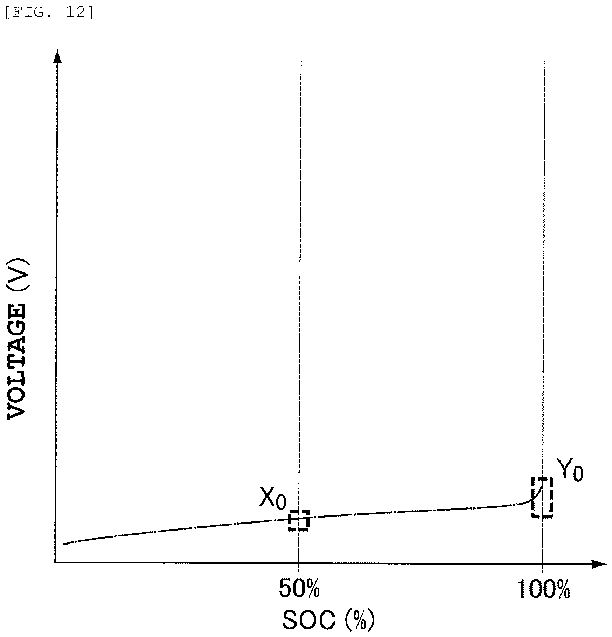

FIG. 12 shows an example of the SOC-CCV curve of a cell using a positive electrode active material having an olivine type crystal structure. This SOC-CCV curve is a curve obtained in constant current charging.

The SOC-CCV curve can be obtained, for example, by using a charging and discharging device SD8 system manufactured by Hokuto Denko Corporation and the like and connecting the cell to the terminal of the charging and discharging device to perform charging in a CC charging mode (constant current charging mode) or CP charging mode (constant power charging mode) at an upper limit voltage of 4.0 V at each current value (for example, about 0.01C to 5C).

In the above system, the capacity [mAh] is calculated by recording the current value flowing per hour and integrating the obtained values. Similarly, the voltage [V] is also recorded.

By setting these values on the horizontal axis and the vertical axis, respectively, it is possible to create a SOC-CCV curve until the voltage [V] reaches 4.0 V.

The cell using a positive electrode active material having an olivine type crystal structure has the characteristic that the voltage gradually increases as charging progresses when charging, and the voltage rises sharply in a region of a SOC of 99% to 100%.

The positive electrode active material having an olivine type crystal structure is preferably lithium iron phosphate.

The SOC-CCV curve has a steep slope in a region near a SOC of 0% at the initial stage of charging, but is gradually rising to the right in most regions.

Therefore, the ratio of the amount of change in voltage to the amount of change in battery capacity (voltage change amount/battery capacity change amount) in a region of a SOC of 49% to 51% in which charging has progressed by about half of full charge is considered as a representative value of the slope of the SOC curve when charging is performed normally, and is set to a slope X.

Then, the ratio of the voltage change amount to the battery capacity change amount at the point where charging progresses, the battery is almost fully charged, and the voltage rises sharply in a region of a SOC of 99% to 100% in the SOC-CCV curve of the battery is set to slope Y.

Since the SOC-CCV curve varies depending on the specifications of the cell and the charging conditions, the slope X and the slope Y are recorded for each different charging condition for each specification of the cell, and a library storing the slopes is prepared.

Assuming that such a library has been prepared, charging as the method for charging the lithium ion battery module is performed.

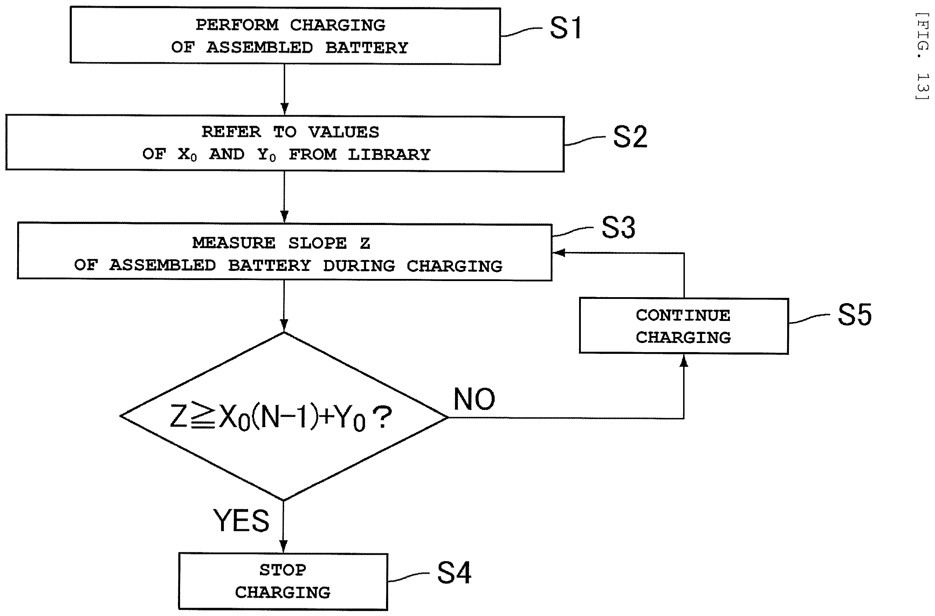

FIG. 13 is a flowchart showing a procedure of a method of charging a lithium ion battery module.

A lithium ion battery including an assembled battery formed by connecting cells in series is charged (step S1).

Next, for the cells constituting the assembled battery, the values of the slope $X_0$ and the slope $Y_0$, which are the values of the slope X and the slope Y corresponding to the charging conditions used for charging, are referred from the library (step S2).

The order of step S1 and step S2 may be reversed. As the charging conditions, for example, in the case of charging by constant current charging in which the current value is a(mA), the values of the slope $X_0$ and the slope $Y_0$ are referred to from the library created in the constant current charging in which the current value is a (mA).

In addition, for example, in the case of charging by constant power charging in which the power value is W, the values of the slope $X_0$ and the slope $Y_0$ are referred to from the library created in the constant current charging in which the current value is W.

Subsequently, in a region in which the voltage across the assembled battery during charging is 3.3 × N (V) or more (N represents the number of laminated cells), the ratio of the amount of change in voltage to the amount of change in battery capacity during charging (slope Z) is continuously measured (step S3).

The voltage across the assembled battery is proportional to the number of laminated cells. The region in which the slope Z is measured is a region in which the voltage across the assembled battery is 3.3 × N (V) or more, which is intended to exclude a region near a SOC of 0% at the initial stage of charging.

This is because the slope Z may rise sharply in the region near a SOC of 0% at the initial stage of charging.

Then, whether or not the relational expression (1) of the slope Z measured in step S3, the number of laminated cells N, and the slope $X_0$ and the slope $Y_0$ referred to from the library is satisfied is confirmed.

$$Z \geq X_0(N-1) + Y_0 \quad . \quad . \quad . \quad \text{Expression (1)}$$

The expression is based on the assumption that the expression is satisfied in the case where there is one cell that causes a voltage change with respect to the amount of change in battery capacity at the point where the voltage rises sharply in the region of a SOC of 99% to 100% in the SOC-CCV curve of the battery for the cells constituting the assembled battery.

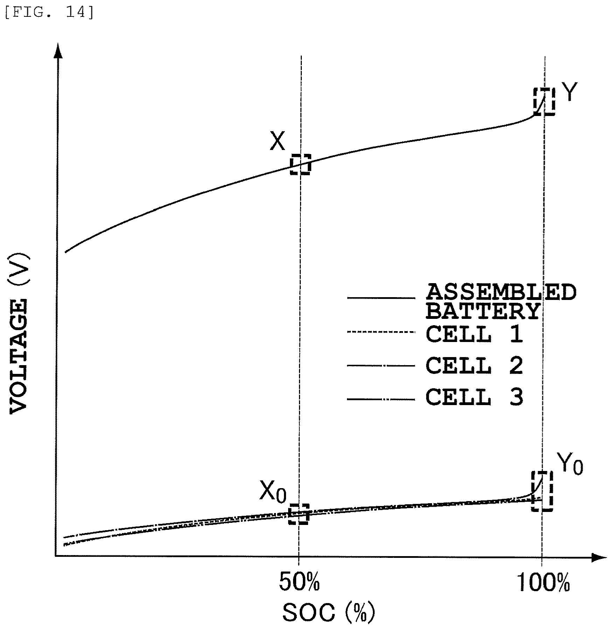

FIG. 14 is a diagram showing the SOC-CCV curve of each cell of the assembled battery in which the number of laminated cells is 3 (N = 3) and the SOC-CCV curve of assembled battery.

These SOC-CCV curves are curves obtained in constant current charging.

The meaning of the above relational expression (1) will be described with reference to this drawing.

The SOC-CCV curves are almost the same for the three cells (cells 1 to 3), and the slope $X_0$ and the slope $Y_0$ can be obtained from these curves.

The slope $X_0$ of the cell is gradually rising to the right.

When the number of laminated cells in the assembled battery is 1, that is, when the above relational expression (1) is applied to the cell, N = 1, and thus the expression (1) is satisfied in the case where $Z \geq Y_0$.

Since the slope $Y_0$ is a slope in the case where the voltage rises sharply in the region of a SOC of 99% to 100% under the charging conditions used for charging the cell, the fact that $Z \geq Y_0$ means that one cell constituting the assembled battery is fully charged, and when the cell is more charged, the cell is overcharged.

Next, the case of an assembled battery is considered.

In the SOC-CCV curve of the assembled battery, the slope X is a representative value of the slope of the SOC curve in a state in which charging is normally performed.

The slope X in the state in which charging is normally performed is proportional to the number of laminated cells in the assembled battery.

Therefore, the slope X of the assembled battery in which the number of laminated cells is 3 is about 3 times the slope $X_0$ of the cell (refer to FIG. 14).

Since the slope of the SOC curve in the state in which charging is normally performed in the assembled battery is proportional to the number of laminated cells in the assembled battery, by multiplying the slope $X_0$, which is the value of the slope X corresponding to the charging conditions used for charging the cell, by (N-1), the baseline in determining whether the slope Z has risen sharply is changed to $X_0(N-1)$, which is a value according to the number of laminated cells.

Then, a value "$X_0(N-1) + Y_0$", which is the value obtained by adding the slope $Y_0$ when the voltage suddenly rises in the region of a SOC of 99% to 100% under the charging conditions used for charging the cell to the value of the slope that becomes the baseline, is obtained.

For $Y_0$, only 1 is added regardless of the number of laminated cells (the coefficient of $Y_0$ is 1). This is because the time when even one of the N cells constituting the assembled battery is fully charged is used as a criterion for determining that overcharging occurs.

Using this value, when $Z \geq X_0(N-1) + Y_0$, one of the N cells constituting the assembled battery is determined to be fully charged, and when the cell is more charged, the cell is determined to be overcharged.

From the above, in the case where the relational expression (1) is satisfied, overcharging may occur in any of the cells constituting the assembled battery, and thus charging is stopped (step S4).

On the other hand, in the case where the relational expression (1) is not satisfied, it can be determined that there is no possibility of overcharging in any of the cells constituting the assembled battery, and thus charging is continued (step S5).

After continuing charging, the process returns to step S3 to continuously measure the slope Z, and when the relational expression (1) is satisfied, charging is stopped.

The number of laminated cells in the assembled battery to which the method of charging the lithium ion battery module is applied is not limited, and is preferably 2 to 24.

When the number of laminated cells is 24 or less, there is little difference from the case where the state of charge is monitored for each cell, and whether or not the charge is stopped is easily determined.

In the method of charging the lithium ion battery module, it is preferable that the lithium ion battery module includes a voltage measuring unit that measures the voltage (mV) during charging of the assembled battery, a current measuring unit that measures the current value (mA) of the assembled battery during charging, a slope calculation unit that calculates slope Z (voltage change amount (mV)/battery capacity change amount (mAh)), which is a ratio of an amount of change in voltage to an amount of change in battery capacity at the time of charging obtained from the voltage measured by the voltage measuring unit, the current value and the charging time measured by the current measuring unit, and a charging stop mechanism that stops charging the assembled battery when the slope calculated by the slope calculation unit exceeds a predetermined value, the slope Z is continuously measured by the slope calculation unit, and when the relational expression (1) is satisfied, the charging stop mechanism is activated to stop charging the assembled battery.

As an overall configuration example of the lithium ion battery module including the voltage measuring unit, the current measuring unit, the slope calculation unit, and the charging stop mechanism, the same one as described with reference to FIG. 11 can be used.

The slope calculation unit determines whether or not the relational expression (1) is satisfied.

The slope calculation unit includes software for determining whether or not the relational expression (1) is satisfied.

The values of the slope $X_0$ and the slope $Y_0$ obtained by referring to the library may be substituted and used as the values of the slope $X_0$ and the slope $Y_0$ of the relational expression (1) in the software used for the determination in the slope calculation unit.

The library may be a database included in the software of the slope calculation unit. In that case, a step of referring to the values of the slope $X_0$ and the slope $Y_0$ from the library is performed as a part of the processing in the slope calculation unit.

The library may be a database provided outside the lithium ion battery module. In this case, a computer provided with the slope calculation unit is connected to the database by wire or wirelessly, and the step of referring to the values of the slope $X_0$ and the slope $Y_0$ from the library is performed.

The library may be an external document arranged on the outside of the lithium ion battery module. In this case, the operator inputs the values of the slope $X_0$ and the slope $Y_0$ into the computer provided with the slope calculation unit according to the specification of the cell and the charging conditions, and the step of referring to the values of the slope $X_0$ and the slope $Y_0$ from the library is performed.

Industrial Applicability

The lithium ion battery module of the present invention is particularly useful as a lithium ion battery module used for mobile phones, personal computers, hybrid vehicles, and electric vehicles.

Reference Signs List

11 Positive electrode current collector
13 Positive electrode active material layer
21 Negative electrode current collector
23 Negative electrode active material layer
30 Separator
40 Sealing material
100 Lithium ion cell
110, 115 First metal sheet
120, 125 Second metal sheet
130 Elastic member
140, 145 Battery outer container
140a Resin layer
140b Metal layer
140c Resin layer
150 Metal member
160 Positive electrode current collector plate
170 Negative electrode current collector plate
200 Power storage element
300, 400 Lithium ion battery module
500, 600 Battery pack
1110 Battery outer container
1120 Frame body
1130 Positive electrode terminal
1140 Negative electrode terminal
1150 Exterior material
1160 First current collector member
1170 Second current collector member
1180 Elastic member
1200 Power storage element
1300 Lithium ion battery module
1310 Positive electrode current collector plate
1320 Negative electrode current collector plate
1330 Connection means
1340, 1350 Output terminal
1400, 1500, 1600 Battery pack
2001 Lithium ion battery module
2010a, 2010b, 2010c, 2010d Cell
2011 Positive electrode current collector
2013 Positive electrode active material layer
2021 Negative electrode current collector (positive electrode current collector)
2023 Negative electrode active material layer
2030 Separator
2040 Sealing material
2100 Assembled battery
2111, 2121 Assembled battery voltage measuring terminal
2131, 2141 Charging terminal
2200 Computer
2210 Voltmeter
2220 Ammeter
2230 Slope calculation unit
2240, 2250, 2260 Signal line
2300 Charging stop mechanism
2400 Power supply

**Claims**

**1.** A lithium ion battery module comprising, in order:

a first metal sheet;
a power storage element; and
a second metal sheet,
wherein the power storage element includes a lithium ion cell in which a positive electrode current collector, a positive electrode active material layer, a separator, a negative electrode active material layer, and a negative electrode current collector are laminated in this order, the positive electrode current collector and the negative electrode current collector are provided as outermost layers, and an electrolytic solution is enclosed by sealing outer peripheries of the positive electrode active material layer and the negative electrode active material layer, a conductive elastic member is arranged between the positive electrode current collector of the outermost layer of the power storage element and the first metal sheet, and/or between the negative electrode current collector of the outermost layer of the power storage element and the second metal sheet, and the first metal sheet and the second metal sheet are insulated from each other.

2. The lithium ion battery module according to claim 1, further comprising:

a battery outer container in which the power storage element is housed,
wherein the battery outer container includes the first metal sheet and the second metal sheet, and
the first metal sheet and the second metal sheet each have a contact surface in contact with the elastic member and an exposed surface exposed to an outside of the battery outer container.

3. The lithium ion battery module according to claim 1, further comprising:

a battery outer container in which the first metal sheet, the power storage element, and the second metal sheet are housed, and
a part of a metal sheet constituting the first metal sheet and a part of a metal sheet constituting the second metal sheet penetrate the battery outer container as metal members and are drawn out to an outside of the battery outer container, or
the metal members connected to the first metal sheet and the second metal sheet penetrate the battery outer container and are drawn to the outside of the battery outer container.

4. The lithium ion battery module according to any one of claims 1 to 3,
wherein the conductive elastic member is a graphite sheet.

5. The lithium ion battery module according to any one of claims 1 to 4,
wherein the positive electrode current collector and/or the negative electrode current collector is a resin current collector.

6. The lithium ion battery module according to any one of claims 1 to 5,
wherein a ratio of an area of the first metal sheet to an area of the positive electrode current collector of the outermost layer of the power storage element, a ratio of an area of the second metal sheet to an area of the negative electrode current collector of the outermost layer of the power storage element, and a ratio of an area of the elastic member to the area of the positive electrode current collector of the outermost layer of the power storage element or the negative electrode current collector of the outermost layer of the power storage element each are 70% or more.

7. A battery pack comprising:

a plurality of the lithium ion battery modules according to any one of claims 1 to 6,
wherein positive electrodes and negative electrodes of the lithium ion battery modules are connected in series.

8. A battery pack comprising:

a plurality of the lithium ion battery modules according to any one of claims 1 to 6,
wherein positive electrodes and negative electrodes of the lithium ion battery modules are connected in parallel.

[FIG. 1]

[FIG. 2]

A

B

[FIG. 3]

A

B

[FIG. 4]

[FIG. 5]

[FIG. 6]

A

B

[FIG. 7]

1400

1130

1300

1140

1130

1300

1140

1130

1300

1140

1130

1300

1140

[FIG. 8]

[FIG. 9]

[FIG. 10]

[FIG. 11]

EP 4 020 635 A1

[FIG. 12]

[FIG. 13]

EP 4 020 635 A1

```
┌─────────────────────────────────┐
│      PERFORM CHARGING           │——— S1
│      OF ASSEMBLED BATTERY       │
└─────────────────────────────────┘
                │
                ▼
┌─────────────────────────────────┐
│      REFER TO VALUES            │——— S2
│  OF X₀ AND Y₀ FROM LIBRARY      │
└─────────────────────────────────┘
                │
                ▼
┌─────────────────────────────────┐
│      MEASURE SLOPE Z            │——— S3
│ OF ASSEMBLED BATTERY DURING CHARGING │
└─────────────────────────────────┘
```

$$Z \geqq X_0(N-1) + Y_0 \, ?$$

NO

YES

CONTINUE CHARGING ——— S5

STOP CHARGING ——— S4

[FIG. 14]

**INTERNATIONAL SEARCH REPORT**

International application No.

PCT/JP2020/031216

A. CLASSIFICATION OF SUBJECT MATTER
H01M 4/58(2010.01)i; H01M 4/66(2006.01)i; H01M 10/052(2010.01)i; H01M
10/0566(2010.01)i; H01M 10/0585(2010.01)i; H01M 10/44(2006.01)i; H01M
50/10(2021.01)i; H01M 50/20(2021.01)i; H01M 50/50(2021.01)i; H01M
50/543(2021.01)i
FI: H01M2/10 Y; H01M2/02 K; H01M2/02 L; H01M2/10 S; H01M2/10 M;
H01M2/30 C; H01M2/30 D; H01M2/20 A; H01M4/66 A; H01M10/0585;
H01M10/052; H01M10/44 A; H01M4/58; H01M10/0566; H01M2/10 E

According to International Patent Classification (IPC) or to both national classification and IPC

B. FIELDS SEARCHED

Minimum documentation searched (classification system followed by classification symbols)
H01M4/58; H01M4/66; H01M10/052; H01M10/0566; H01M10/0585; H01M10/44;
H01M2/02; H01M2/10; H01M2/20; H01M2/30

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2018-200856 A (DAIMLER AG) 20 December 2018 (2018-12-20) fig. 1-4, related descriptions | 1-8 |
| A | JP 2017-530503 A (LG CHEM, LTD.) 12 October 2017 (2017-10-12) entire text, all drawings | 1-8 |
| A | JP 2019-21382 A (NISSAN MOTOR CO., LTD.) 07 February 2019 (2019-02-07) entire text, all drawings | 1-8 |
| A | JP 2003-303583 A (NISSAN MOTOR CO., LTD.) 24 October 2003 (2003-10-24) entire text, all drawings | 1-8 |

☒ Further documents are listed in the continuation of Box C.     ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
19 October 2020 (19.10.2020)

Date of mailing of the international search report
27 October 2020 (27.10.2020)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

**INTERNATIONAL SEARCH REPORT**

International application No.

PCT/JP2020/031216

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2012/153866 A1 (NEC CORP.) 15 November 2012 (2012-11-15) entire text, all drawings | 1-8 |

Form PCT/ISA/210 (continuation of second sheet) (January 2015)

**INTERNATIONAL SEARCH REPORT**
Information on patent family members

International application No.

PCT/JP2020/031216

| Patent Documents referred in the Report | Publication Date | Patent Family | Publication Date |
|---|---|---|---|
| JP 2018-200856 A | 20 Dec. 2018 | (Family: none) | |
| JP 2017-530503 A | 12 Oct. 2017 | US 2017/0054119 A1 the whole document | |
| JP 2019-21382 A | 07 Feb. 2019 | (Family: none) | |
| JP 2003-303583 A | 24 Oct. 2003 | (Family: none) | |
| WO 2012/153866 A1 | 15 Nov. 2012 | US 2014/0087235 A1 the whole document | |

Form PCT/ISA/210 (patent family annex) (January 2015)

**REFERENCES CITED IN THE DESCRIPTION**

**Patent documents cited in the description**

- JP 2005276486 A
- JP 2012150905 A
- WO 2015005116 A
- JP 2017054703 A
- WO 2015005117 A
- JP H10255805 A
- WO 2009119075 A
- JP 2012012262 A
- WO 2016063932 A